# EUROPEAN PATENT APPLICATION

(11) **EP 4 838 789 A2**
(43) Date of publication of application: **11.11.2026**
(21) Application number: 26176212.4
(22) Date of filing: 04.05.2026
(51) Int. Cl.: H04B 7/024

(54) **COORDINATED BEAMFORMING (CBF) VIA CBF SESSIONS BY NEGOTIATING A NUMBER OF CBF TRANSMISSIONS**

(30) Priority: 08.05.2025 IN 202521044559; 18.06.2025 US 202563826208 P; 20.02.2026 US 202619545228
(71) Applicant: Avago Technologies International Sales Pte. Limited, Singapore 768923 (SG)
(72) Inventor: Puducheri Sundaravaradhan, Srinath, Irvine, CA, 92618 (US); Porat, Ron, Irvine, CA, 92618 (US); Su, Hang, Irvine, CA, 92618 (US); Verma, Sindhu, Irvine, CA, 92618 (US); Adhikari, Shubhodeep, Irvine, CA, 92618 (US)
(74) Representative: Grünecker Patent- und Rechtsanwälte PartG mbB

(57) **Abstract**

In some embodiments, a first access point may include a network interface and one or more processors that may exchange, by the network interface, one or more frames with a second access point to determine one or more parameters for performing a coordinated beamforming (CBF) transmission in a session, and a number of CBF transmissions during the session. The one or more processors may perform, by the network interface to one or more stations (STAs), CBF transmissions of a plurality of data units according to the number of CBF transmissions, using the one or more parameters during the session.

## Description

### Cross-Reference to Related Applications

This application claims the benefit of and priority to Indian Patent Application No. 202521044559, filed on May 8, 2025 and U.S. Provisional Application No. 63/826,208, filed on June 18, 2025, which are incorporated herein by reference in entirety for all purposes.

### Field of the Disclosure

This disclosure generally relates to systems and methods for improving efficiency of coordinated beamforming (CBF) using CBF sessions and/or using frame sequences for extending or continuing a CBF session beyond an initial (or first) CBF transmission.

### Background of the Disclosure

Coordinated beamforming (CBF) is a multi-AP (access points) transmission technique in which two or more access points align their downlink transmissions to their respective stations using shared or pre-negotiated parameters, such as nulling directions, spatial-stream allocations, or preamble-related information, so that these transmissions can occur concurrently and with reduced interference.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 is an example CBF setup frame sequence, according to some embodiments.
FIG. 3 is another example CBF setup frame sequence, according to some embodiments.
FIG. 4 is an example CBF acknowledgment (ACK) frame sequence, according to some embodiments.
FIG. 5 is another example CBF ACK frame sequence, according to some embodiments.
FIG. 6 is yet another example CBF ACK frame sequence, according to some embodiments.
FIG. 7A to FIG. 7E are example frame sequences for extending a CBF session using a two-way handshake negotiation, according to some embodiments.
FIG. 8 is a flow diagram showing an example process for extending a CBF session using a two-way handshake negotiation, according to some embodiments.
FIG. 9A to FIG. 9D are example frame sequences for extending a CBF session using a three-way handshake negotiation, according to some embodiments.
FIG. 10 is a flow diagram showing an example process for extending a CBF session using a three-way handshake negotiation, according to some embodiments.
FIG. 11 is a flow diagram showing an example process for extending a CBF session by negotiating a number of CBF transmissions, according to some embodiments.
FIG. 12 is a flow diagram showing an example process for extending a CBF session by access points (APs) alternately transmitting trigger frames, according to some embodiments.
FIG. 13 is an example frame sequence between a sharing AP and a shared AP during a CBF transmission, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
Section A describes a network environment and computing environment which can be useful for practicing embodiments described herein; and
Section B describes embodiments of systems and methods for providing a scaled up Ethernet framework.

### A. Computing and Network Environment

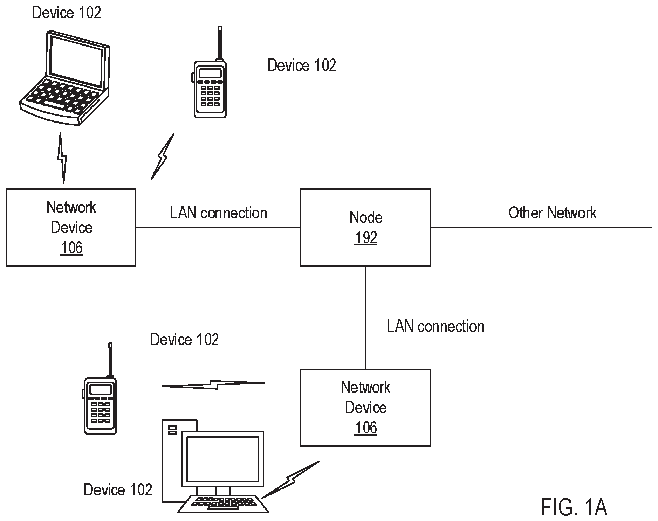

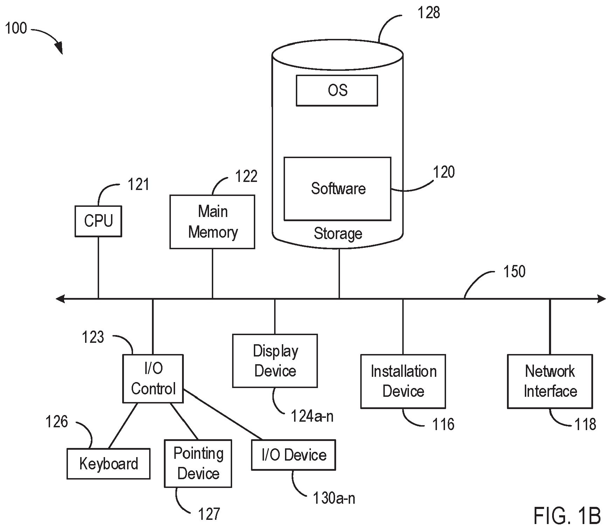

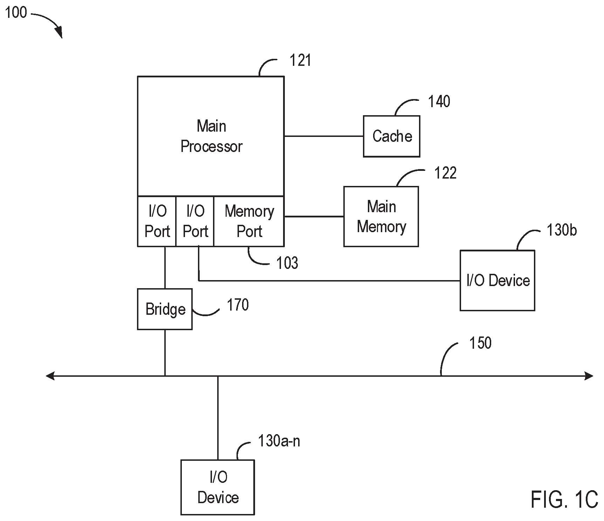

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Coordinated Beamforming with Nulling (CBF)

A Coordinated Beamforming with Nulling (CBF) transmission, in which two or more APs transmit concurrently to the respective associated STAs of each AP, can be preceded by a setup phase comprising handshakes and frame-exchanges that coordinate resources and/or timing for the forthcoming downlink. These frame-exchanges can occur between the APs themselves and also between each AP and its associated STAs so that both inter-AP alignment and AP-STA readiness can be established before the coordinated transmission begins.

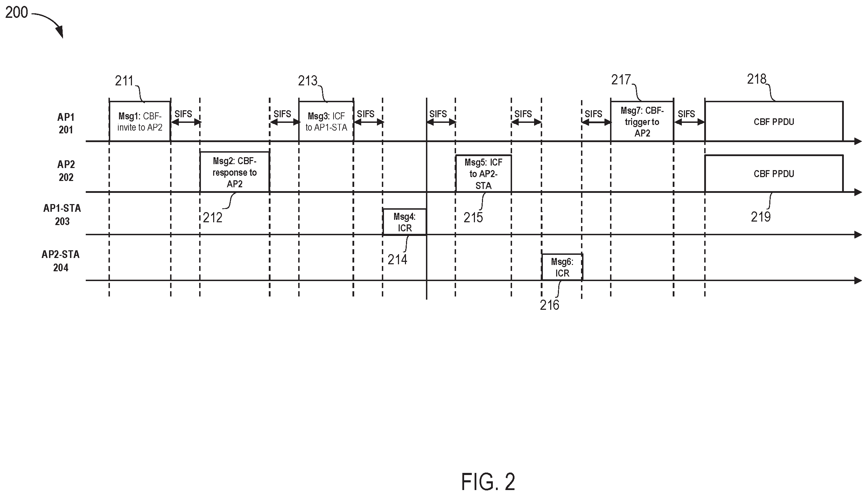

FIG. 2 is an example CBF setup frame sequence 200, according to some embodiments. In the CBF setup frame sequence 200, AP1 (201) and AP2 (202) coordinate with their respective stations AP1-STA (203) and AP2-STA (204) prior to a coordinated beamforming downlink. In this sequence, AP1 initiates with a CBF-invite 211, AP2 responds with a CBF-response 212. The AP-to-STA readiness is established through an Initial Control Frame (ICF) 213 and Initial Control Response (ICR) 214 exchange for AP1/AP1-STA, and through an ICF 215 and ICR 216 exchange for AP2/AP2-STA. After these handshakes, AP1 transmits a CBF-trigger 217 to AP2 following Short Interframe Space (SIFS) timing, providing AP2 with alignment information for the ensuing synchronous transmission. Subsequently, following SIFS timing, both APs perform their coordinated downlink physical layer protocol data units (CBF PPDUs) 218 and 219.

Referring to FIG. 2, AP-AP frame exchanges can include a CBF-invite 211 transmitted by AP1 (201) to notify AP2 (202) of a CBF transmit opportunity (TXOP) and to invite AP2 to participate in the CBF TXOP. The CBF-invite can include information identifying which AP1-STAs will be serviced in the TXOP, the number of spatial streams (Nss) allocated to each AP1-STA, the maximum Nss allowed for AP2's STAs, the bandwidth of the CBF transmission, and/or the minimum and maximum duration of the CBF transmission that AP1 can support. A CBF-response 212 transmitted by AP2 in response to the CBF-invite 211 notifies AP1 whether AP2 will participate in the CBF TXOP and, if participation is confirmed, can indicate to AP1 which AP2-STAs will be serviced in the TXOP, the number of spatial streams (Nss) allocated per AP2-STA, the MCS to be used per AP2-STA, and/or the minimum and maximum duration of CBF transmission that AP2 can support. A CBF-trigger 217 transmitted by AP1 preceding the CBF transmission 218 serves as a reference for AP2 so that the ensuing CBF transmissions from AP1 and AP2 can be aligned in start time, end time, frequency, and/or preamble contents. The CBF-trigger can contain information needed to construct the preamble of the CBF PPDU to be transmitted. AP-STA frame exchanges can include an ICF (e.g., ICF 213) transmitted by an AP at or towards the beginning of a TXOP to notify one or more associated STAs of the upcoming TXOP in order to query their availability and prepare them for receiving or transmitting data. For example, the ICF can trigger STAs that operate in enhanced multi-link single radio (EMLSR) listen-mode or Dynamic-Power-Save (DPS) low-capability mode to switch to full receive/transmit capability mode. An ICR (e.g., ICR 214) is transmitted by one or more STAs addressed by the ICF to the AP in response to receiving the ICF and can indicate availability and acknowledge switching to full receive/transmit capability mode. AP-AP frame exchanges can be interleaved with or embedded within AP-STA frame exchanges so that inter-AP coordination proceeds in tandem with AP-STA readiness.

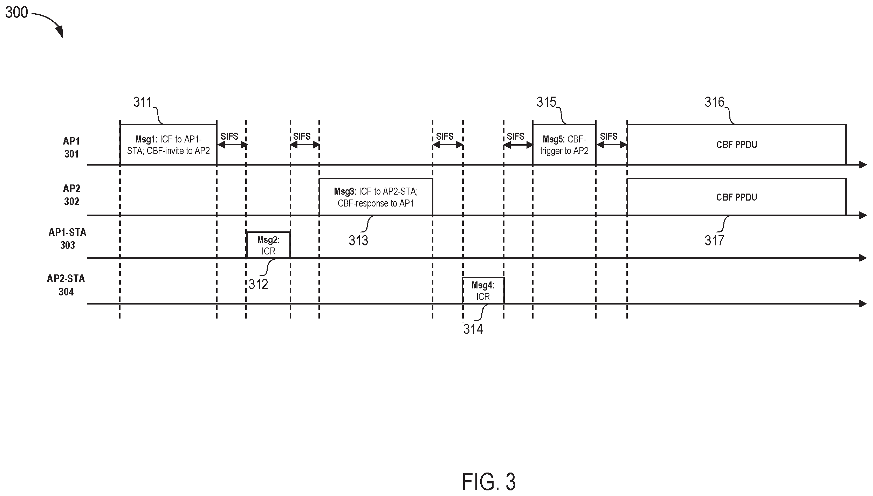

FIG. 3 is another example CBF setup frame sequence 300, according to some embodiments. In the CBF setup frame sequence 300, AP1 (301) combines the ICF to AP1-STA with the CBF-invite (as message 311) to AP2 (302), receives an ICR (312), and then AP2 issues a combined message 313 of an ICF to AP2-STA (304) and a CBF-response to AP1, followed by an ICR 314. AP1 transmits a CBF-trigger 317 after SIFS, serving as the timing and preamble reference so that both APs can commence the downlink beamformed PPDUs 316, 317 in a synchronized manner.

Subsequent to a CBF transmission, a CBF acknowledgement (ACK) phase can occur in which frames are exchanged between APs and respective STAs to solicit or to transmit acknowledgement frames such as ACKs and BlockACKs (BAs). These acknowledgement frames provide an indication to each AP of which MPDUs transmitted in the preceding CBF transmission were received and decoded correctly, without errors, at each STA.

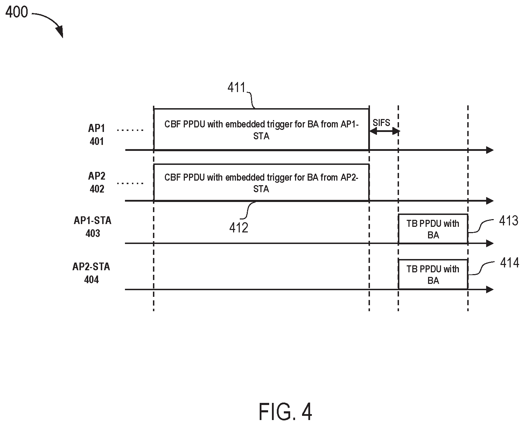

FIG. 4 is an example CBF ACK frame sequence 400, according to some embodiments. In the frame sequence 400, each AP 401, 402 transmits a CBF PPDU 411, 412 that embeds a trigger to solicit immediate BlockAck (BA) feedback from its STA, with AP1 (401) addressing AP1-STA (403) and AP2 (402) addressing AP2-STA (404). Following the embedded triggers, the addressed STAs return their respective BAs in trigger-based (TB) PPDUs 413, 414 at SIFS. This sequence corresponds to the case where each AP signals in its CBF PPDU that an immediate ACK/BA is solicited and relies on the embedded trigger to enable a consolidated, SIFS-spaced TB PPDU response.

In CBF ACK frame sequence 400, the CBF PPDU or transmission 411, 412 may indicate, for each AP 401, 402 and for each of its respective STAs, that an immediate ACK or BA is solicited, and the CBF PPDU may embed a trigger frame that enables each STA to transmit its corresponding ACK or BA in a TB PPDU. The STAs 403, 404 associated with both APs may then transmit their respective ACKs or BAs jointly in a single TB PPDU 413, 414 transmitted at SIFS following the completion of the CBF transmission, allowing the acknowledgment procedure to occur in a unified uplink response.

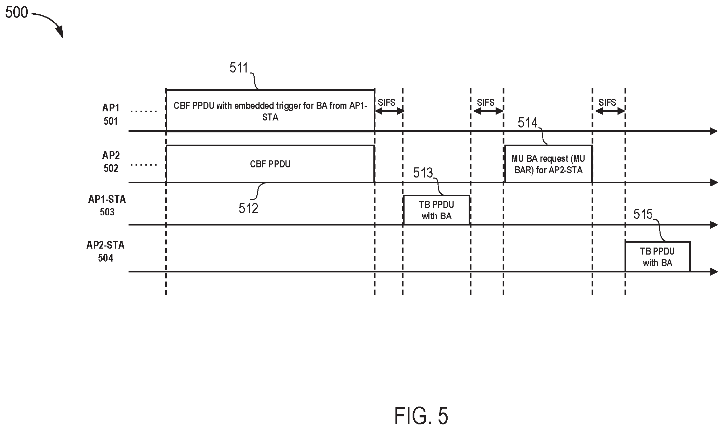

FIG. 5 is another example CBF ACK frame sequence 500, according to some embodiments. In the frame sequence 500, AP1 (501) embeds a trigger for BA in its CBF PPDU 511 to AP1-STA 503, while AP2 (502) does not solicit immediate BA in its PPDU 512 to AP2-STA 504. After SIFS, AP1-STA 503 returns a TB PPDU with BA 513. Subsequently, AP2 issues a multi-user BA request (MU-BAR) 514 to AP2-STA 504, upon which AP2-STA returns a TB PPDU carrying BA 515. FIG. 5 shows the case where only one AP elicits an immediate BA via an embedded trigger and the other AP fetches its BAs using a separate MU-BAR after the first BA completes.

In the frame sequence 500, the CBF PPDU or transmission 511 may be structured so that AP1 indicates to each of its associated STAs that an ACK or BlockACK (BA) is solicited immediately following the CBF PPDU, meaning that the STAs of AP1 are instructed to return their ACKs or BAs at SIFS after the end of the CBF transmission, while AP2 does not include such an indication for its associated STAs and therefore does not cause those STAs to transmit a BA immediately following the CBF PPDU. When AP1 embeds a trigger for each STA in the CBF transmission, such as when more than one AP1-STA is addressed, all AP1-STAs may transmit their ACKs or BAs jointly in a single TB PPDU. However, when only one AP1-STA is included in the CBF transmission and AP1 chooses not to embed a trigger for that STA, the STA may respond with an ACK or BA in a non-TB PPDU. Following the ACKs or BAs transmitted by the AP1-STAs at SIFS after the completion of the CBF transmission, AP2 may transmit a BA request (BAR) to its own STAs, and when AP2 addresses one ore more STAs it may transmit a multi-user BAR (MU-BAR) 514. The STAs addressed by the BAR transmitted by AP2 then return their respective ACKs or BAs at SIFS after the end of the BAR or MU-BAR, and when an MU-BAR is used, the STAs may respond jointly in a TB PPDU (e.g., TB PPDU with BA 515).

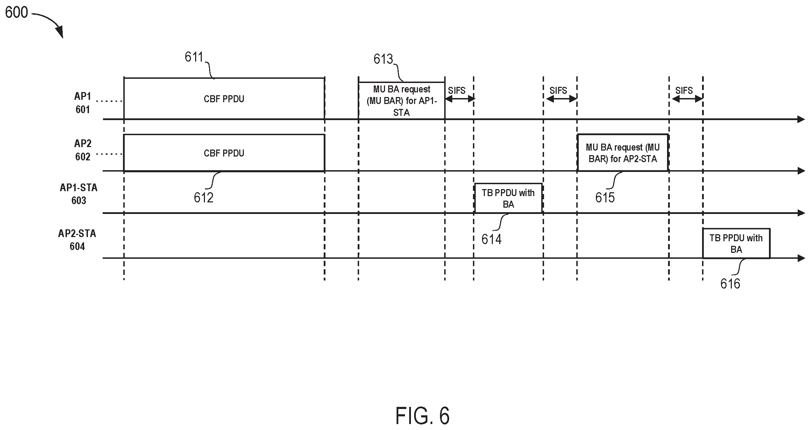

FIG. 6 is yet another example CBF ACK frame sequence 600, according to some embodiments. In the frame sequence 600, neither AP solicits an immediate BA in their CBF PPDUs 611, 612, with AP1 (601) and AP2 (602) addressing AP1-STA (603) and AP2-STA (604) respectively. Following the CBF PPDUs, AP1 transmits an MU-BAR 612 and receives a TB PPDU with BA 613. After another SIFS, AP2 transmits its MU-BAR 615 and then receives a TB PPDU with BA 616.

In the CBF ACK frame sequence 600, neither AP indicates within the CBF PPDU or transmission that an ACK or BA is solicited immediately following the CBF PPDU, and consequently none of the STAs associated with either AP transmits an ACK or BA at the completion of the CBF PPDU. Following the CBF PPDU at a SIFS interval, AP1 may transmit a BA request (BAR) to its STAs, and when AP1 is addressing one or more STAs it may instead transmit a multi-user BAR (MU-BAR) 613. The STAs addressed by the BAR or MU-BAR from AP1 then transmit their respective ACKs or BAs at SIFS after the end of the BAR or MU-BAR, and when an MU-BAR is used the STAs return their ACKs or BAs jointly in a TB PPDU 614. After the ACKs or BAs from the STAs of AP1 are completed at SIFS following the BAR or MU-BAR, AP2 then transmits its own BAR to its associated STAs, and AP2 may likewise transmit an MU-BAR 615 when one or more STAs are addressed. The STAs addressed by the BAR or MU-BAR from AP2 then transmit their respective ACKs or BAs at SIFS after the end of the BAR or MU-BAR, and when AP2 employs an MU-BAR, the STAs transmit their ACKs or BAs jointly in a TB PPDU 616.

### C. Systems And Methods For Providing Coordinated Beamforming (CBF) Via CBF Sessions

In one aspect, the multiple frames involved in setting up a CBF transmission may introduce protocol overhead, and in order to minimize the impact of this overhead and improve efficiency it is generally desirable to make the CBF transmission as long as possible.

However, several constraints can prevent a single long CBF transmission from being used in all cases. There is a limit to the maximum duration of a PPDU in OFDM format under current 802.11 specifications, and in the 2.4 GHz, 5 GHz, or 6 GHz bands this limit is approximately 5.4 ms. The maximum amount of data that can be communicated to any STA in a single PPDU is limited by the maximum MPDU length, which is on the order of 11 KB under current 802.11 specifications, and by the maximum number of MPDUs that can be aggregated within a single A-MPDU in the PPDU for that STA; this aggregation capacity in turn is limited by the corresponding maximum transmit capability of the AP and the maximum receive capability of the STA. The maximum number of outstanding MPDUs pending acknowledgment from a STA is further limited by the BlockAck Window size (BA window size) of the STA, counted from the earliest unacknowledged MPDU, so a STA benefits from acknowledging successfully received MPDUs in a previous transmission in order for the AP to aggregate to a maximum limit in a subsequent transmission. The amount of data for a STA that is available at its associated AP at the time of commencement of the CBF transmission may also be limited by the offered traffic load or traffic profile, and this availability can constrain the transmit duration of the CBF PPDU even when other limits would allow a longer transmission.

To address these limitations, the present disclosure can improve efficiency of CBF using CBF sessions (also referred to as "session") and/or use frame sequences for extending or continuing a CBF session beyond an initial (or first) CBF transmission. In some embodiments, a CBF session may be formed in which the initial CBF transmission is followed by successive additional CBF transmissions, and the additional CBF transmissions within the CBF session can incur smaller or reduced overhead compared to the initial overhead associated with the setup phase. The present disclosure according to some embodiments can provide frame sequences and methods that enable efficient CBF operation by allowing multiple CBF transmissions to occur within a single CBF session, thereby reusing previously established parameters and minimizing the need for repeated setup exchanges across the successive CBF transmissions in the session.

In some embodiments, a CBF session (or simply "session") may be a sequence of one or more CBF transmissions that reuse one or more parameters which remain constant across the CBF transmissions within the session, allowing the coordinated downlink activity to proceed without renegotiating those parameters for each subsequent transmission. A CBF session may begin with an initial setup phase that precedes the first CBF transmission in the sequence and establishes the inter-AP and/or AP-STA conditions for coordinated beamforming with nulling (CBF). Within the session, ACK or BA (Block ACK) frames may be transmitted by STAs to APs between CBF transmissions to acknowledge which medium access control (MAC) protocol data units (MPDUs) in a preceding CBF transmission were received correctly by a STA, thereby allowing the APs to manage MPDU windows and determine suitable aggregation levels for later transmissions within the session.

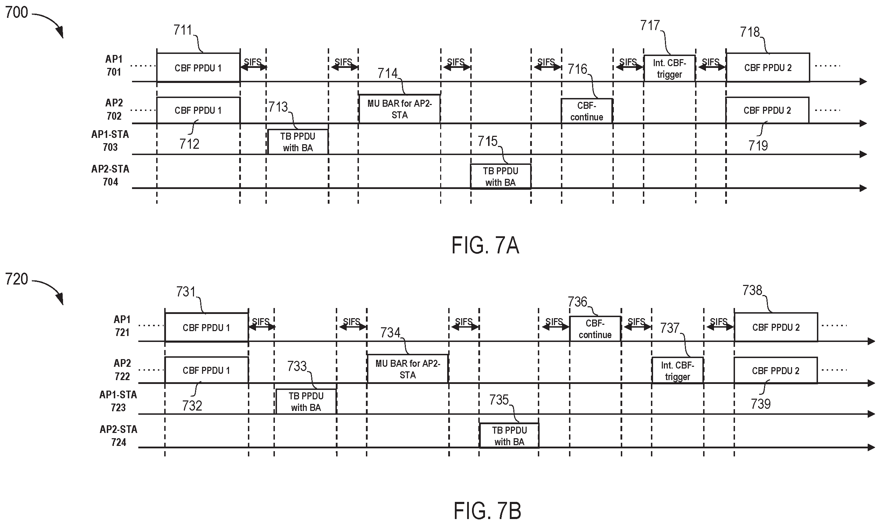

In some embodiments, a CBF session may occur within a single TXOP such that successive CBF transmissions can be separated by SIFS-spaced timing, and the set of APs participating in each CBF transmission may remain unchanged relative to preceding transmissions in the same session. The set of STAs addressed by a CBF transmission may remain the same as, or be a subset of, the set of STAs addressed by a preceding CBF transmission in the session, and similarly the MCS used for a STA in a CBF transmission may be the same as the MCS used for that STA in a preceding CBF transmission. The Nss used for a STA in a CBF transmission may also remain the same or may not exceed the Nss used for that STA in a preceding CBF transmission. The set of nulling directions used by an AP in a CBF transmission, meaning the spatial directions or vectors along which the AP nulls its transmitted signal, may similarly remain the same as the nulling directions used in preceding CBF transmissions within the session. The APs participating in the session may exchange one or more CBF session-extension frames after each CBF transmission to determine whether the CBF session should continue or terminate, whether parameters for upcoming CBF transmissions should change, and/or whether one or more parameters or contents of the preamble for an upcoming CBF transmission should be indicated. These CBF session-extension frames may be transmitted independently or may be embedded within other frames or PPDUs exchanged between the APs and their respective STAs, such as MU-BAR frames or TB PPDUs that concurrently carry BAs from STAs. Multiple different embodiments of such CBF session-extension frame sequences (see FIGS. 7A-7E, 8, 9A-9D, 10, 11, 12) may be used within a given CBF session.

In some embodiments, during a CBF session, it is possible that no ICF or ICR exchange occurs between an AP and its associated STAs in the intervals between successive CBF transmissions. In some embodiments, the intermediate frames exchanged between APs may not be addressed to certain STAs. As a result, EMLSR-capable or DPS-capable STAs may need to remain in full RX/TX capability until a predetermined timeout period has expired following a CBF transmission or a CBF-ACK sequence. This behavior relies on use of the EMLSR/DPS extended timeout mechanism already applied during the CBF initial setup phase, although the timeout interval appropriate for the CBF-continuation phase may differ from, and is generally shorter than, the timeout used during the CBF-setup phase. The extended timeout may begin at the conclusion of the ACK transmitted by the STA.

In situations involving sequential ACKs, such as those associated with CBF ACK frame sequence 500 (see FIG. 5) or CBF ACK frame sequence 600 (see FIG. 6), the extended timeout of a STA that transmits its ACK earlier may or must exceed the timeout of a STA that transmits its ACK later, ensuring that each STA remains available through the time interval in which it might be addressed in a subsequent CBF PPDU. The extended timeout may be configured so that the next CBF-PPDU intended for the STA is expected prior to expiration of the timeout. If no CBF-PPDU is received while the timeout is active, or if a CBF-PPDU is received that is not addressed to the STA, the extended timeout may end and the EMLSR or DPS STA may return to a base state, such as listen or low-power listen mode. In some embodiments, extended timeout rules may instruct a STA to reset its timer and restart the timeout countdown when it detects one or more frames associated with an intermediate AP-AP exchange, including a CBF-continue frame or an intermediate CBF-invite, intermediate CBF-response, or intermediate CBF-trigger, if such a frame may precede a CBF PPDU or CBF transmission. These rules may also specify that a STA resets its timer upon detecting certain special or predefined control frames that involve its associated AP as either transmitter or receiver, such as a clear-to-send (CTS)-to-AP (also referred to as "CTS-A") addressed to that AP.

In some embodiments, the ICF-ICR exchanges conducted at the start of a CBF TXOP may confirm the availability of the STAs for the intended duration of transmission and may also confirm whether those same STAs remain available for the duration for subsequent CBF PPDUs. In some cases, the ICRs may verify the known availability of the STAs, enabling the APs to determine whether to continue transmitting multiple CBF PPDUs and identifying which STAs are suitable targets for the next CBF PPDU. Alternatively, the CBF ACK sequence may embed an multi-STA block ACK (MBA) to signal the availability periods of the STAs for subsequent CBF PPDU transmissions, and this availability information may be used by the APs when selecting whether to continue the session and which STAs should be addressed in future PPDUs.

In some embodiments, an AP may include in an MU-BAR or in a CBF-PPDU a signal indicating that it is eliciting the last BA or otherwise indicating that no additional downlink data remains for one or more non-AP STAs in the CBF session or TXOP. When an EMLSR or DPS non-AP STA receives such an indication, it may return to its listen mode or low-capability mode immediately after transmitting its BA rather than waiting for the expiration of an extended timeout period. This indication may be conveyed within the final MU-BAR or within the last CBF-PPDU of the CBF frame sequence and may serve as a common indication for all non-AP STAs addressed by the AP.

In some embodiments, various frames exchanged between APs during a CBF session between CBF transmissions, including CBF ACK sequence frames (such as MU-BAR or TB PPDU with BA) and standalone variants of intermediate CBF-invite, intermediate CBF-response, CBF-continue, or intermediate CBF-trigger frames, may include padding to allow adequate processing time for their intended recipients, such as APs. The amount of padding may be pre-negotiated, and/or the padding applied to intermediate CBF-invite, intermediate CBF-response, and intermediate CBF-trigger frames may be smaller than the padding used for the corresponding CBF-invite, CBF-response, and CBF-trigger frames during the initial setup phase.

In some embodiments, optional hidden node protection may be applied for subsequent CBF PPDUs even though ICF and/or ICR exchanges are not required before each non-initial CBF PPDU. Such protection may involve intermediate ICF and/or ICR exchanges between each AP and its respective participating STAs. The intermediate ICF may include less padding, or no padding, compared to the initial-phase ICF because EMLSR or DPS STAs may not require additional time to switch to full RX/TX capability. Furthermore, the intermediate ICF and/or ICR may utilize shorter-duration frame sequences, such as MU-RTS/CTS or RTS/CTS when a single STA is addressed, even when the ICF/ICR in the initial setup phase utilized longer sequences such as buffer status report poll (BSRP) followed by buffer status report (BSR) in a TB PPDU. Using shorter sequences can reduce overhead during the continuation of the CBF session.

In some embodiments, when a CBF session uses sequential ACKs consistent with CBF ACK frame sequence 500 (see FIG. 5) or CBF ACK frame sequence 600 (see FIG. 6), the APs may dynamically negotiate the order or sequence in which each AP's STAs provide their ACKs or BAs. This negotiation can determine which AP's acknowledgments occur first and which occur second and may be adjusted flexibly from one CBF-ACK sequence to the next through re-negotiation during the active CBF session. This negotiation can occur or be signaled in one or more preceding frames exchanged either prior to or within the ongoing CBF session.

With the foregoing in mind, the figures and description below illustrate various examples of the techniques for improving efficiency of CBF using CBF sessions and/or using frame sequences for extending or continuing a CBF session beyond an initial (or first) CBF transmission. The figures and description below are non-limiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described. In some embodiments, a combination of two or more techniques (e.g., more than one technique can be employed) may be used within a CBF session.

### 1. Session Extension Frame Sequences Using A Two-Way Handshake Negotiation

In some embodiments, in a CBF session, after each CBF transmission, the participating APs can negotiate whether a next CBF transmission will occur. This negotiation may take the form of a two-way handshake in which one AP transmits a CBF-continue message to the other AP indicating whether it is able to participate in a next CBF transmission, for example based on the availability of traffic. When the CBF-continue message indicates that the transmitting AP can participate in the next CBF transmission, the message may additionally convey information such as the maximum or minimum duration of the next CBF transmission that the AP can support, the set of STAs that will be addressed by the transmitting AP in the next CBF transmission, the MCS for each STA to be addressed, the number of spatial streams Nss for each STA to be addressed, and/or the preferred guard interval + long training field (GI+LTF) for the next CBF transmission.

In some embodiments, if the CBF-continue message signals an ability to proceed, the receiving AP may respond with an intermediate CBF-trigger indicating whether it is able to participate in the next CBF transmission, again based on traffic or related conditions. When the intermediate CBF-trigger indicates that the transmitting AP can participate, the message may further specify the duration of the next CBF transmission, for instance by conveying the L-SIG (legacy signal field) length, as well as the set of STAs of the transmitting AP that will be addressed in the next CBF transmission and the contents of one or more preamble fields, including L-SIG length, GI+LTF, per-STA MCS, and/or per-STA Nss. When the intermediate CBF-trigger confirms participation by the AP, both APs may begin the next CBF transmission concurrently or simultaneously, at SIFS following the intermediate CBF-trigger, for example.

In some embodiments, the set of STAs addressed in the next CBF transmission may be the same set of STAs, or a subset of the STAs, addressed in the preceding CBF transmission. Similarly, the Nss for each STA addressed in the next CBF transmission may be equal or not exceed the Nss used for that STA in the preceding CBF transmission. The CBF-continue message or the intermediate CBF-trigger may be transmitted as a standalone frame or may be embedded within the CBF ACK sequence associated with the preceding CBF transmission; for example, either message may be included inside an MU-BAR frame transmitted by an AP to its STAs so that the other AP receives the continuation information concurrently, or one of these messages may be transmitted by an AP in a TB PPDU that also includes BAs transmitted by STAs associated with the other AP.

In some embodiments, to provide adequate processing time for the intended recipient, the CBF-continue message or the intermediate CBF-trigger may include padding, and this padding may be adjusted based on implementation constraints. When the CBF-continue message is transmitted as a separate frame, the intermediate CBF-trigger may follow at SIFS after the CBF-continue message. When the CBF-continue message is embedded within the CBF ACK sequence, the intermediate CBF-trigger may be transmitted at SIFS after the last frame of the CBF-ACK sequence.

In some embodiments, the APs may pre-negotiate conditions for deferring the CBF ACK sequence until multiple CBF transmissions are completed within the CBF session, for example, until such time when an AP cannot continue CBF transmissions without receiving ACKs or BAs from its STAs, or when an AP has no more pending traffic. In such cases, the APs may inform their respective STAs that a single CBF ACK sequence will be used to acknowledge MPDUs transmitted across multiple CBF transmissions in the CBF session. If either AP cannot proceed with further CBF transmissions without receiving ACKs or BAs from its STAs, it may indicate this situation in the CBF-continue or intermediate CBF-trigger messages so that a CBF ACK sequence, such as CBF ACK frame sequence 600 (see FIG. 6), can begin.

In some embodiments, in between successive CBF transmissions occurring within the same CBF session, there may be no ICF or ICR exchange between each AP and its respective STAs. In some situations, the absence of a CBF-continue message from one AP may indicate that the AP is unable to continue participating in the CBF session. The APs may also agree beforehand on which AP is expected to transmit the CBF-continue message following each CBF transmission in order to prevent the APs from sending continuation messages simultaneously or concurrently, and the identity of the AP responsible for transmitting the CBF-continue message may alternate between APs across successive CBF transmissions in the session.

In some embodiments, the Duration field in the MAC header of one or more frames transmitted during the initial setup phase, including frames such as the CBF-trigger, ICF, ICR, CBF-response, or CBF-invite, may be configured to protect the ensuing frame sequence by causing receivers to defer medium access until the end of the upcoming CBF transmission, the corresponding CBF ACK sequence, the CBF-continue message, or the intermediate CBF-trigger as needed. When the APs agree to extend the TXOP through an additional CBF transmission, the Duration field may be set within the CBF-continue or intermediate CBF-trigger messages to protect the second CBF transmission, the associated CBF ACK sequence, the next CBF-continue message, and/or the next intermediate CBF-trigger. This procedure may be repeated before each further CBF transmission to maintain orderly medium access and ensure proper protection of the coordinated exchange.

FIG. 7A to FIG. 7E are example frame sequences for extending a CBF session using a two-way handshake negotiation, according to some embodiments. FIG. 7A depicts a CBF session-extension frame sequence 700 in which AP1 701 and AP2 702 complete a first coordinated downlink (CBF PPDU 1 (711, 712)) to AP1-STA 703 and AP2-STA 704, elicit acknowledgment traffic, exchange continuation signaling, and then proceed toward a second coordinated downlink (CBF PPDU 2 (718, 719)). CBF PPDU 1 (711, 712) are transmitted from AP1 and AP2, the SIFS-spaced TB PPDU with BA 713 is transmitted from the AP1-STA 703, AP2 transmits an MU-BAR 714 to AP2-STA 704, and a subsequent TB PPDU with BA 715 is transmitted by AP2-STA 704. Subsequently, AP2 702 transmits a CBF-continue indication 716, and then AP1 701 transmits an intermediate CBF-trigger 717 that precedes CBF PPDU 2 (718, 719) at SIFS.

FIG. 7B depicts a CBF session-extension frame sequence 720 in which AP1 721 and AP2 722 execute CBF PPDU 1 (731, 732), and AP1 receives SIFS-spaced TB PPDU with BA 733 from AP1-STA 723. AP2 transmits MU BAR 734 to Ap2-STA 724, which sends TB PPDU with BA 735 at SIFS. Subsequently, AP1 sends a CBF-continue 736, and AP2 responds with an intermediate CBF trigger 737 to initiate CBF PPDU 2 (738, 739).

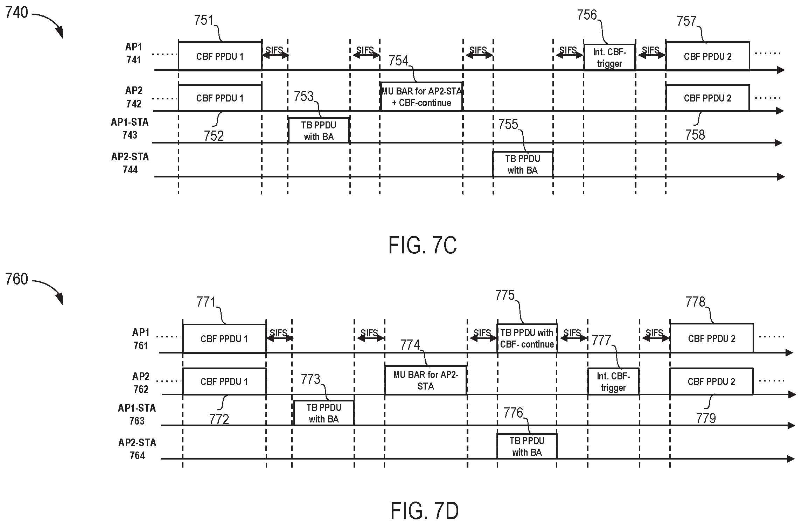

FIG. 7C depicts a CBF session-extension frame sequence 740 in which a CBF-continue is conveyed or embedded inside a MU-BAR 754 rather than by a separate control frame. AP1 741 and AP2 742 perform the first coordinated downlink (CBF PPDU 1 (751, 752)) to AP1-STA 743 and AP2-STA 744, receive the SIFS-spaced TB PPDU with BA 753 from AP1-STA 743. AP2 then carries or embeds the CBF-continue inside a MU BAR (MU BAR + CBF-continue 754). After TB PPDU with BA 755 is transmitted from AP2-STA 744, AP1 sends an intermediate CBF-trigger 756 at SIFS to prepare CBF PPDU 2 (757, 758).

FIG. 7D presents a closely related case where the CBF-continue is delivered within an TB PPDU. In a CBF session-extension frame sequence 760, AP1 761 and AP2 762 perform the first coordinated downlink (CBF PPDU 1 (771, 772)) to AP1-STA 763 and AP2-STA 764, receive the SIFS-spaced TB PPDU with BA 773 from AP1-STA 763. AP2 sends MU-BAR 774, then AP1 embeds CBF-continue 775 inside TB PPDU, SIFS after MU-BAR 774. In the MU-BAR frame 774, AP2 may signal, indicate or reserve a spatial or frequency resource-allocation for AP1 within the subsequent TB PPDU, in order to allow AP1 to embed the CBF-continue message in the TB PPDU. After transmitting the TB PPDU with CBF-continue 775 and TB PPDU with BA 776 (from AP2-STA 764) concurrently, AP2 sends an intermediate CBF-trigger 777 at SIFS to prepare CBF PPDU 2 (778, 779).

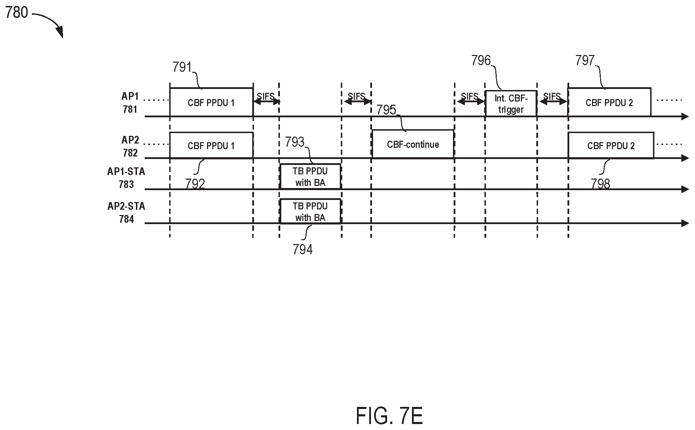

FIG. 7E depicts a CBF session-extension frame sequence 780 in which after AP1 781 and AP2 782 perform CBF PPDU 1 (791, 792), AP2 782 sends a CBF-continue 795, SIFS after the SIFS-spaced BA exchange (e.g., TB PPDU with BA 793 from AP1-STA 783, and TB PPDU with BA 794 from AP2-STA 784). For example, the CBF-continue is transmitted SIFS after the end of the TB PPDU that contains the BAs from the respective STAs of AP1 and AP2. Subsequently, AP1 781 sends an intermediate CBF-trigger 796, leading into CBF PPDU 2 (797, 798).

In some embodiments, a first access point (e.g., AP1, AP2 in FIG. 7A to FIG. 7E) may include a network interface and one or more processors. In some embodiments, the term "network interface" may refer to any communication interface of an access point or other device that enables the device to transmit or receive wireless frames, including control frames, trigger frames, data units, acknowledgments, or other wireless protocol elements used during a CBF session. The network interface may support single-link or multi-link operation and may be configured to exchange signaling with peer access points or with associated stations.

In some embodiments, the term "access point" may refer to a wireless network device capable of transmitting frames, coordinating CBF transmissions with peer APs, serving associated stations, or negotiating CBF session parameters. An access point may initiate or respond to CBF-related signaling and may participate in concurrent or alternating CBF transmissions.

In some embodiments, the term "frame" may encompass any wireless transmission unit that conveys control signaling, CBF-related triggers, acknowledgments, MU-BARs, data payload, or embedded information used to support CBF negotiations, continuation decisions, or scheduling. Frames may be standalone or may be embedded within PPDUs or TB PPDUs.

The one or more processors may exchange, by the network interface, one or more frames with a second access point to determine one or more parameters for performing a coordinated beamforming (CBF) transmission in a session.

In some embodiments, the term "parameters for performing a CBF transmission" may include information used by access points to align or coordinate their transmissions, such as selected stations to be served, modulation and coding schemes, numbers of spatial streams, nulling directions, transmission durations, or preamble-related configuration. Other parameters may be incorporated depending on the coordination requirements of a session.

In some embodiments, the term "exchanging one or more frames" may refer to any communication in which devices such as access points transmit or receive wireless frames that may contain control information, acknowledgments, CBF-related triggers, CBF-continue indications, or other signaling useful for initiating, maintaining, or terminating a CBF transmission sequence. This exchange may occur through independent frames or through frames that embed CBF-related information within other protocol elements.

In some embodiments, the term "CBF transmission" may refer to a downlink PPDU or set of PPDUs transmitted by an AP using coordinated beamforming parameters so that multiple APs can send data to their stations with aligned timing and reduced interference. A CBF transmission may be preceded by a trigger, may rely on previously negotiated parameters, or may occur as part of a series of transmissions in a CBF session.

The one or more processors may perform, by the network interface, CBF transmissions of a plurality of data units to one or more stations (STAs) using the one or more parameters during the session. During the session, in response to performing a CBF transmission of a first data unit, the one or more processors may transmit a first frame (e.g., CBF-continue) indicating that the first access point can participate in a next CBF transmission. In response to receiving a trigger frame, the one or more processors may perform a CBF transmission of a second data unit.

In some embodiments, the term "data units" may refer to any wireless data carried in one or more PPDUs, MPDUs, aggregated frames, or other physical or MAC-layer encapsulations used in coordinated or non-coordinated transmissions. Such data units may include payload intended for one or more stations and may be transmitted using beamforming or other physical-layer techniques.

In some embodiments, the term "participating in a CBF transmission" may refer to the role of an access point or station that transmits, receives, or acknowledges frames involved in a coordinated beamforming event. Participation may involve transmitting or responding to CBF invite frames, CBF response frames, CBF trigger frames, ICFs or ICRs, transmitting data units, responding to a trigger frame, sending control indications regarding continuation, or providing BAs in a TB PPDU.

In some embodiments, the term "stations" may refer to wireless client devices that receive downlink transmissions, provide acknowledgments, or participate in trigger-based uplink transmissions during a CBF session. STAs may support features such as EMLSR (Enhanced Multi-Link Single Radio), dynamic power save operation, or multi-user reception, and may respond to AP-initiated BA requests or embedded triggers.

In some embodiments, the term "trigger frame" may refer to a frame transmitted by one access point to indicate that another access point should perform a concurrent or subsequent CBF transmission. The trigger may specify timing, preamble information, BA-method, or continuation information for the next CBF PPDU, and may appear as a standalone frame or be embedded within another protocol element such as a MU-BAR or TB PPDU.

In some embodiments, the term "next CBF transmission" may refer to any subsequent coordinated beamforming transmission performed after a preceding transmission within a CBF session. Its occurrence may depend on continuation signaling exchanged between the access points, availability of traffic, station readiness, or negotiated session parameters.

In some embodiments, the trigger frame may be received within a short interframe space (SIFS) after the first frame (e.g., CBF-continue) is transmitted. In some embodiments, the second data may be transmitted within a SIFS after the trigger frame is received. In some embodiments, the first frame may be transmitted within a SIFS after a trigger-based physical layer protocol data unit (TB PPDU) with a block acknowledgement (BA) is received from the one or more STAs or a set of STAs associated with the second access point.

In some embodiments, the first frame may be embedded in a multi-user block-acknowledgment request (MU-BAR) frame addressed to the one or more STAs. In some embodiments, the trigger frame may be received within a SIFS after a TB PPDU with a BA is received from the one or more STAs or a set of STAs associated with the second access point. In some embodiments, the first frame may be embedded in a TB PPDU.

In some embodiments, the term "embedding a frame in another frame" may refer to placing CBF-related signaling, such as a CBF-continue message, a trigger indication, or other AP-to-AP coordination information, within an MU-BAR frame, a TB PPDU carrying a BA, or another MAC/PHY structure. Such embedding may reduce overhead or allow signaling to be conveyed concurrently to both stations and the peer AP.

In some embodiments, a first access point (e.g., AP1, AP2 in FIG. 7A to FIG. 7E) may include a network interface and one or more processors. The one or more processors may exchange, by the network interface, one or more frames with a second access point to determine one or more parameters for performing a coordinated beamforming (CBF) transmission in a session. The one or more processors may perform, by the network interface, CBF transmissions of a plurality of data units to one or more stations (STAs) (e.g., STAs associated with the first access point) using the one or more parameters during the session. During the session, in response to performing a CBF transmission of a first data unit, and in response to receiving a first frame indicating that the second access point can participate in a next CBF transmission, the one or more processors may transmit a trigger frame and then perform a CBF transmission of a second data unit.

In some embodiments, the trigger frame may be transmitted within a SIFS after the first frame is received. In some embodiments, the second data is transmitted within a SIFS after the trigger frame is transmitted. In some embodiments, the first frame is received within a SIFS after a TB PPDU with a BA is received from the one or more STAs or a set of STAs associated with the second access point.

In some embodiments, the first frame may be embedded in a MU-BAR frame addressed to one or more STAs associated with the second access point. In some embodiments, the trigger frame may be transmitted within a SIFS after a TB PPDU with a BA is received from the one or more STAs or a set of STAs associated with the second access point. In some embodiments, the first frame may be embedded in a TB PPDU.

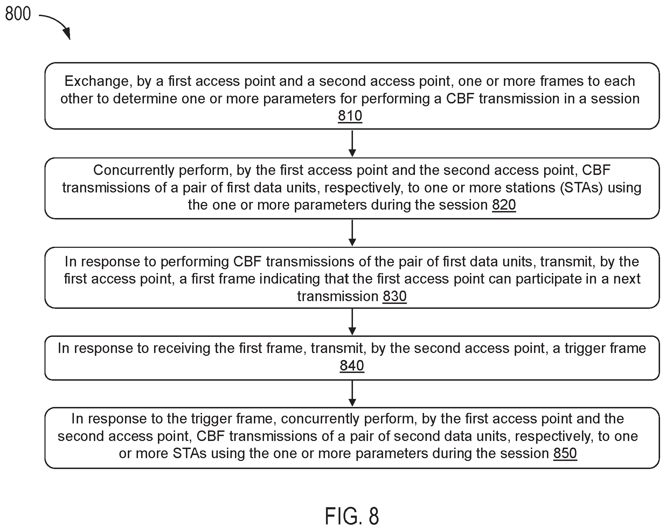

FIG. 8 is a flow diagram showing an example process 800 for extending a CBF session using a two-way handshake negotiation, according to some embodiments. In some embodiments, the process 800 may perform CBF transmissions during a session. In some embodiments, the process 800 is performed by one or more processors (e.g., the processor 121) of a device (e.g., the device 102, the network device 106, AP1 (201, 301, 401, 501, 601, 701, 721, 741, 761, 781), AP2 (202, 302, 402, 502, 602, 702, 722, 742, 762, 782), etc.). In other embodiments, the process 800 is performed by other entities. In some embodiments, the process 800 includes more, fewer, or different steps than shown in FIG. 8.

At step 810, a first access point (e.g., one of AP1 201 and AP2 202) and a second access point (e.g., the other of AP1 201 and AP2 202) may exchange one or more frames (e.g., frames 211, 212, 213, 216, 217 in FIG. 2) to each other to determine one or more parameters for performing a CBF transmission (e.g., CBF PPDU 218, 219) in a session. In some embodiments, the one or more parameters may include at least one of duration and/or length of CBF transmission/PPDU, one or more preamble contents of CBF PPDU, a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission. In some embodiments, the one or more parameters may be determined prior to the CBF transmissions of the plurality of data units.

At step 820, the first access point (e.g., AP1 701) and the second access point (e.g., AP2 702) may concurrently perform CBF transmissions of a pair of first data units (e.g., CBF PPDU 1 (711), CBF PPDU 1 (712)), respectively, to one or more stations (STAs) (e.g., AP1-STA 703, AP2-STA 704) using the one or more parameters during the session.

In some embodiments, the term "concurrently performing CBF transmissions of a pair of data units" may refer to scenarios in which two access points transmit their respective data units at aligned times, using previously determined CBF parameters, so that both transmissions occur in parallel while mitigating interference through coordinated beamforming. The concurrent transmissions may be repeated across multiple steps of a CBF session.

At step 830, in response to performing CBF transmissions of the pair of first data units, the first access point (e.g., AP1 721) may transmit a first frame (e.g., CBF-continue 736) indicating that the first access point can participate in a next CBF transmission. In some embodiments, the first frame (e.g., CBF-continue 736) may be transmitted within a SIFS after a TB PPDU with a BA (e.g., TB PPDU with BA 735) is received from the one or more STAs (e.g., AP2-STA 724). In some embodiments, the first frame may be embedded in a MU-BAR frame (e.g., MUBAR + CBF-continue 754) addressed to one or more STAs associated with the first access point (e.g., AP-STA 744). In some embodiments, the first frame may be embedded in a TB PPDU (e.g., TB PPDU with CBF-continue 775).

At step 840, in response to receiving the first frame (e.g., CBF-continue 736), the second access point (AP2 722) may transmit a trigger frame (e.g., CBF-trigger 737). In some embodiments, the trigger frame (e.g., CBF-trigger 737) may be transmitted within a SIFS after the first frame (e.g., CBF-continue 736) is transmitted. In some embodiments, the trigger frame (e.g., CBF-trigger 756) may be transmitted within a SIFS after a TB PPDU with a BA (e.g., TB PPDU with BA 755) is received from the one or more STAs (e.g., AP2-STA 744).

At step 850, in response to the trigger frame (e.g., CBF-trigger 756), the first access point and the second access point may concurrently perform CBF transmissions of a pair of second data units (e.g., CBF PPDU 2 (757, 758)), respectively, to one or more STAs using the one or more parameters during the session.

### 2. Session Extension Frame Sequences Using A Three-Way Handshake Negotiation

In some embodiments, in a CBF session, after each CBF transmission, the participating APs may negotiate whether the session will continue with a next CBF transmission. This negotiation may take the form of an intermediate three-way handshake that resembles the three-way AP-handshake used during the initial setup phase preceding the first CBF transmission (e.g., CBF-invite, CBF response, CBF-trigger as shown in FIG. 2 or FIG. 3). In this handshake, one AP may transmit an intermediate CBF-invite message to the other AP to indicate its ability to participate in the next CBF transmission, for example based on traffic availability for its STAs. The receiving AP may then transmit an intermediate CBF-response message indicating whether it is able to participate in the next CBF transmission, again considering its own traffic availability. Once the intermediate CBF-response confirms that the other AP is available to continue, the first AP may transmit an intermediate CBF-trigger to initiate the next coordinated transmission from both APs.

In some embodiments, the intermediate CBF-invite, intermediate CBF-response, and intermediate CBF-trigger may carry similar information to the corresponding CBF-invite, CBF-response, and CBF-trigger used in the initial setup phase preceding the first CBF transmission of the CBF session. In some implementations, however, these intermediate frames may be shortened in order to reduce overhead. The reduction may be accomplished by omitting certain information that was provided during the initial setup phase, such as the set of STAs of each AP to be addressed in the next CBF transmission, the per-STA MCS values, the per-STA Nss values, the GI+LTF parameters to be used in the next CBF transmission, whether 2xLDPC is to be used per-STA, or the ordering of STAs in the CBF transmission; any information omitted from the intermediate three-way handshake may be inferred from what was originally signaled during the initial setup phase, and therefore remains unchanged for the subsequent CBF transmission.

In some embodiments, between successive CBF transmissions within the same CBF session, there may be no ICF or ICR exchange between each AP and its STAs. In some cases, the absence of an intermediate CBF-invite or an intermediate CBF-response from one AP may indicate that the AP is unable to continue participating in the CBF session. The intermediate CBF-invite and intermediate CBF-response messages may be transmitted as separate frames, or either may be embedded within the CBF ACK sequence that follows the preceding CBF transmission. For example, one of these intermediate messages may be embedded inside an MU-BAR frame transmitted by an AP to its STAs so that the other AP receives the continuation signal concurrently, or the message may be transmitted by an AP in a TB PPDU concurrently with BAs transmitted by STAs associated with the other AP.

In some embodiments, when an intermediate CBF-invite is transmitted as a standalone frame rather than being embedded within the CBF ACK sequence, the corresponding intermediate CBF-response may be sent in a separate frame at SIFS after the intermediate CBF-invite, and the intermediate CBF-trigger may be transmitted at SIFS after the intermediate CBF-response. Similarly, when an intermediate CBF-response is transmitted as a standalone frame rather than being embedded within the CBF ACK sequence, the intermediate CBF-trigger may be transmitted at SIFS after the intermediate CBF-response. When an intermediate CBF-response is embedded in the CBF ACK sequence, the intermediate CBF-trigger may instead be transmitted at SIFS after the final frame in the CBF-ACK sequence.

In some embodiments, the APs may agree beforehand (e.g., at the initial negotiation) to defer the CBF ACK sequence until multiple CBF transmissions within the CBF session have been completed. Such deferred CBF ACK sequence may be used when either AP cannot continue with additional CBF transmissions without receiving ACKs or BAs from its STAs, or when either AP has no further pending traffic. When such a deferral is used, the APs may notify their respective STAs that a single CBF ACK sequence will be used to acknowledge MPDUs transmitted to each STA across multiple CBF transmissions in the CBF session. If either AP becomes unable to continue transmitting CBF PPDUs without first obtaining ACKs or BAs from its STAs, it may indicate this condition within the intermediate CBF-invite, intermediate CBF-response, or intermediate CBF-trigger, prompting initiation of a CBF ACK sequence, such as CBF ACK frame sequence 600 (see FIG. 6).

In some embodiments, the APs may negotiate in advance which AP will transmit the intermediate CBF-invite message following each CBF transmission, which prevents the APs from colliding by transmitting intermediate CBF-invite messages simultaneously. In some embodiments, the negotiation of which AP will transmit the next intermediate CBF-invite message can occur in a preceding (initial or intermediate) CBF-invite, CBF-response or CBF-trigger. In some embodiments, the responsibility for transmitting the intermediate CBF-invite may be assigned to the AP that initiated the CBF session and sent the first CBF-invite in the initial setup phase, or may alternate between APs across successive CBF transmissions within the same CBF session.

In some embodiments, to ensure medium-access protection, the Duration field in the MAC header of frames transmitted during the initial setup phase, including the CBF-trigger, ICF, ICR, CBF-response, or CBF-invite, may be set to a value that protects the ensuing frame sequence by causing receiving devices to defer medium access through the completion of one or more CBF transmissions, the corresponding CBF ACK sequence, the intermediate CBF-invite, the intermediate CBF-response, and the intermediate CBF-trigger. When the APs agree to extend the TXOP to accommodate a second CBF transmission, the Duration field may be set in the intermediate CBF-invite, intermediate CBF-response, or intermediate CBF-trigger to protect the second CBF transmission, the corresponding CBF ACK sequence, any second intermediate CBF-invite, any second intermediate CBF-response, and any second intermediate CBF-trigger. This approach may be repeated before each subsequent CBF transmission within the session so that the frame exchange remains protected under the negotiated TXOP extension.

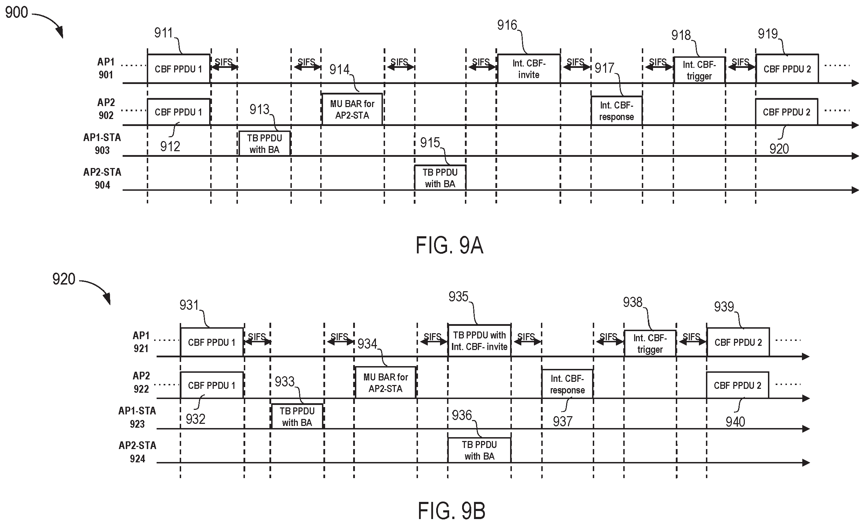

FIG. 9A to FIG. 9D are example frame sequences for extending a CBF session using a three-way handshake negotiation, according to some embodiments. FIG. 9A depicts a CBF session-extension frame sequence 900, which employs an intermediate three-way handshake, for example, an intermediate CBF-invite 916, an intermediate CBF-response 917, and intermediate CBF-trigger 918, after a coordinated downlink (e.g., CBF PPDU 1 (911, 912)). AP1 901 and AP2 902 complete CBF PPDU 1 (911, 912) toward AP1-STA 903 and AP2-STA 904. After AP1-STA 903 sends TB PPDU with BA 913, AP2 902 elicits the SIFS-spaced BA using a MU-BAR 914 and the subsequent BA exchange (e.g., TB PPDU with BA 915). Subsequently, AP1 901 sends an intermediate CBF-invite 916, and then AP2 issues an intermediate CBF-response 918 followed by an intermediate CBF-trigger 920 (from AP1) to start the next downlink (CBF PPDU 2 (919, 920)) at SIFS.

FIG. 9B depicts a CBF session-extension frame sequence 920, in which AP1 921 places or embeds an intermediate CBF-invite within a TB PPDU (e.g., TB PPDU with intermediate CBF-invite 935). AP1 921 and AP2 922 complete CBF PPDU 1 (931, 932) toward AP1-STA 923 and AP2-STA 924. After AP1-STA 923 sends TB PPDU with BA 933, AP2 922 elicits the SIFS-spaced BA using a MU-BAR 934. Subsequently, AP1 921 sends an intermediate CBF-invite 935 concurrently with TB PPDU with BA 936 transmitted from AP2-STA 924, and then AP2 issues an intermediate CBF-response 937 followed by an intermediate CBF-trigger 938 (from AP1) to start the next downlink (CBF PPDU 2 (939, 940)) at SIFS. In the MU-BAR frame 934, AP2 may signal, indicate or reserve a spatial or frequency resource-allocation for AP1 within the subsequent TB PPDU, in order to allow AP1 to embed the intermediate CBF-invite message in the TB PPDU (935).

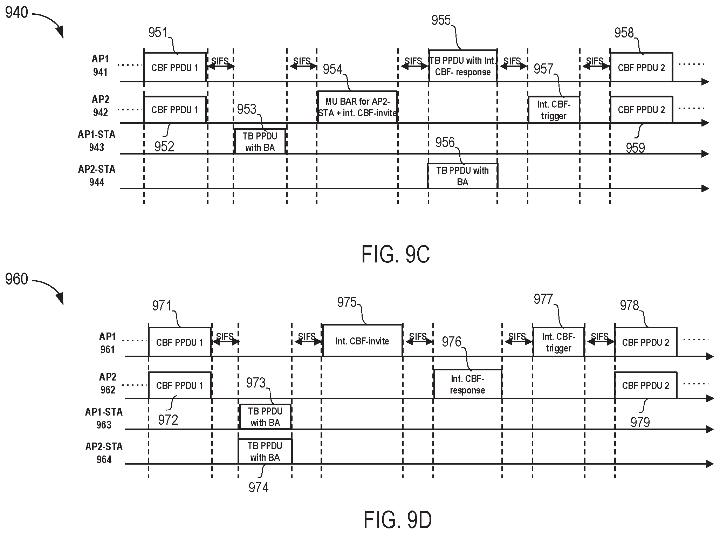

FIG. 9C depicts a CBF session-extension frame sequence 940, in which AP2 942 places or embeds an intermediate CBF-invite within a MUBAR (e.g., MUBAR + intermediate CBF-invite 954, and AP1 941 places or embed an intermediate CBF-response within a TB PPDU (e.g., TB PPDU with intermediate CBF-response 955). AP1 941 and AP2 942 complete CBF PPDU 1 (951, 952) toward AP1-STA 943 and AP2-STA 944. After AP1-STA 943 sends TB PPDU with BA 953, AP2 942 elicits the SIFS-spaced BA using a MU-BAR with intermediate CBF-invite 954. Subsequently, AP1 941 sends TB PPDU embedded with an intermediate CBF-response 955 concurrently with TB PPDU with BA 956 transmitted from AP2-STA 944, and then AP2 issues an intermediate CBF-trigger 957 to start the next downlink (CBF PPDU 2 (958, 959)) at SIFS. In the MU-BAR frame 954, AP2 may signal, indicate or reserve a spatial or frequency resource-allocation for AP1 within the subsequent TB PPDU, in order to allow AP1 to embed the intermediate CBF-response message in the TB PPDU (955).

FIG. 9D depicts a CBF session-extension frame sequence 960, in which AP1 961 and AP2 962 complete CBF PPDU 1 (971, 972) toward AP1-STA 963 and AP2-STA 964. After AP1-STA 963 AP2-STA 964 send TB PPDU with BA 973 and TB PPDU with BA 974 concurrently, AP1 961 sends an intermediate CBF-invite 975. Subsequently, AP2 962 sends an intermediate CBF-response 976, and then AP1 issues an intermediate CBF-trigger 977 to start the next downlink (CBF PPDU 2 (978, 979)) at SIFS.

In some embodiments, a first access point (e.g., AP1, AP2 shown in FIG. 9A to FIG. 9D) may include a network interface and one or more processors. The one or more processors may exchange, by the network interface, one or more frames with a second access point to determine one or more parameters for performing a coordinated beamforming (CBF) transmission in a session. The one or more processors may perform, by the network interface, CBF transmissions of a plurality of data units to one or more stations (STAs) using the one or more parameters during the session. During the session, in response to performing a CBF transmission of a first data unit, the one or more processors may transmit a first frame indicating that the first access point can participate in a next CBF transmission during the session. In response to receiving a second frame indicating that the second access point can participate in the next CBF transmission during the session, the one or more processors may transmit a trigger frame and then perform a CBF transmission of a second data unit.

In some embodiments, the second frame may be received within a SIFS after the first frame is transmitted. In some embodiments, the trigger frame may be transmitted within a SIFS after the second frame is received. In some embodiments, the first frame may be transmitted within a SIFS after a TB PPDU with a BA is received from one or more STAs associated with the second access point. In some embodiments, the first frame may be transmitted within a SIFS after a TB PPDU with a BA is received from one or more STAs associated with the first access point.

In some embodiments, the first frame may be embedded in a TB PPDU. In some embodiments, the first frame is embedded in a MU-BAR frame addressed to the one or more STAs. In some embodiments, the second frame may be embedded in a TB PPDU.

In some embodiments, a first access point (e.g., AP1, AP2 shown in FIG. 9A to FIG. 9D) may include a network interface and one or more processors. The one or more processors may exchange, by the network interface, one or more frames with a second access point to determine one or more parameters for performing a coordinated beamforming (CBF) transmission in a session. The one or more processors may perform, by the network interface, CBF transmissions of a plurality of data units to one or more stations (STAs) using the one or more parameters during the session. During the session, in response to performing a CBF transmission of a first data unit and in response to receiving a first frame (e.g., CBF-invite) indicating that the second access point can participate in a next CBF transmission during the session, the one or more processors may transmit a second frame (e.g., CBF-response) indicating that the first access point can participate in the next CBF transmission. In response to receiving a trigger frame (e.g., CBF-trigger), the one or more processors may perform a CBF transmission of a second data unit during the session.

In some embodiments, the second frame may be transmitted within a SIFS after the first frame is received. In some embodiments, the trigger frame may be received within a short interframe space (SIFS) after the second frame is transmitted. In some embodiments, the first frame may be received within a SIFS after a TB PPDU with a BA is received from the one or more STAs.

In some embodiments, the first frame may be embedded in a TB PPDU. In some embodiments, the first frame may be embedded in a MU-BAR frame addressed to one or more STAs associated with the second access point. In some embodiments, the second frame may be embedded in a TB PPDU.

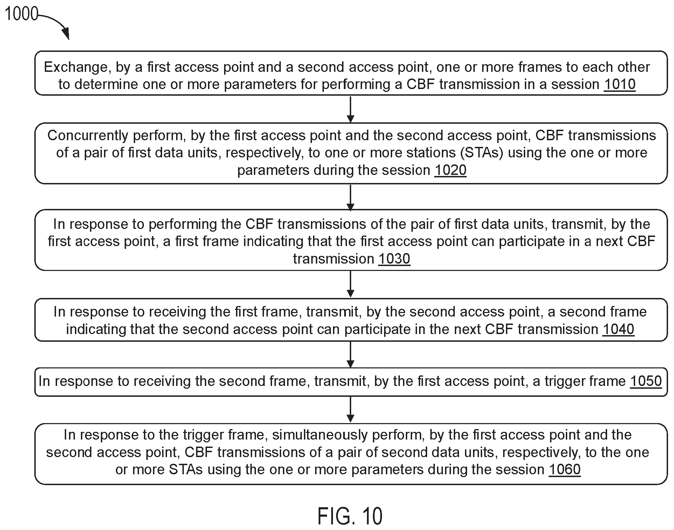

FIG. 10 is a flow diagram showing an example process 1000 for extending a CBF session using a three-way handshake negotiation, according to some embodiments. In some embodiments, the process 1000 may perform a coordinated beamforming (CBF) transmissions during a session. In some embodiments, the process 1000 is performed by one or more processors (e.g., the processor 121) of a device (e.g., the device 102, the network device 106, AP1 (201, 301, 901, 921, 941, 961), AP2 (302, 302, 902, 922, 942, 962), etc.). In other embodiments, the process 1000 is performed by other entities. In some embodiments, the process 1000 includes more, fewer, or different steps than shown in FIG. 10.

At step 1010, a first access point (e.g., one of AP1 201 and AP2 202) and a second access point (e.g., the other of AP1 201 and AP2 202) may exchange one or more frames (e.g., frames 211, 212, 213, 215, 217 in FIG. 3) to each other to determine one or more parameters for performing a CBF transmission (e.g., CBF PPDU 218, 219) in a session. In some embodiments, the one or more parameters may include at least one of duration and/or length of CBF transmission/PPDU, one or more preamble contents of CBF PPDU, a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission. In some embodiments, the one or more parameters may be determined prior to the CBF transmissions of the plurality of data units.

At step 1020, the first access point (e.g., AP1 901) and the second access point (e.g., AP2 902) may concurrently perform CBF transmissions of a pair of first data units (e.g., CBF PPDU 1 (911, 912), respectively, to one or more stations (STAs) (e.g., AP1-STA 903, AP2-STA 904) using the one or more parameters during the session.

At step 1030, in response to performing the CBF transmissions of the pair of first data units, the first access point (e.g., AP1 901) may transmit a first frame (e.g., intermediate CBF-invite 916) indicating that the first access point can participate in a next CBF transmission. In some embodiments, first frame may be transmitted within a SIFS after a TB PPDU with a BA (e.g., TB-PPDU with BA 915) is received from the one or more STAs (e.g., AP2-STA 904). In some embodiments, the first frame is embedded in a TB PPDU (e.g., TB PPDU embedded with intermediate CBF-invite 935). In some embodiments, the first frame is embedded in a MU-BAR frame (e.g., MUBAR embedded with intermediate CBF-invite 954) addressed to one or more STAs (e.g., AP2-STA 944) associated with the first access point.

At step 1040, in response to receiving the first frame, the second access point may transmit a second frame (e.g., intermediate CBF-response 917) indicating that the second access point (e.g., AP2 902) can participate in the next CBF transmission (e.g., CBF PPDU 2 920). In some embodiments, the second frame may be transmitted within a SIFS after the first frame is transmitted. The second frame may be embedded in a TB PPDU (e.g., TB PPDU embedded with intermediate CBF-response 955).

At step 1050, in response to receiving the second frame, the first access point (e.g., AP1 901) may transmit a trigger frame (e.g., intermediate CBF-trigger 918).

At step 1060, in response to the trigger frame, the first access point and the second access point may concurrently perform CBF transmissions of a pair of second data units (e.g., CBF PPDU 2 (919, 920)), respectively, to the one or more STAs (e.g., AP1-STA 903, AP2-STA 904) using the one or more parameters during the session.

### 3. Session Extension Frame Sequences By Negotiating A Number Of CBF Transmissions

In some embodiments, in a CBF session-extension procedure, the participating APs may negotiate in advance a number of future (or additional) CBF transmissions, denoted as N (e.g., a positive integer N), that the APs will jointly perform within the session under the condition that the set of participating STAs for each AP and the corresponding per-STA MCS and Nss values remain unchanged across these transmissions. This negotiated value N may define the structure of the upcoming coordinated beamforming activity and ensure that the CBF session proceeds with a consistent set of transmission parameters for all involved STAs.

In some embodiments, the negotiation that yields the value N may occur during the CBF-setup phase before the first (initial) CBF transmission in the session. During this CBF-setup phase, the initiating AP may indicate its proposed number of CBF transmissions in a CBF-invite or a CBF-trigger, or in both. The responding AP may similarly indicate its proposed number of CBF transmissions in a CBF-response. The final value of N used for the session may be determined as the minimum of the two proposed values, allowing both APs to participate without exceeding their respective traffic availability or capability constraints.

In some embodiments, once the negotiation is complete, the APs may proceed with N successive CBF transmissions (e.g., N CBF transmissions in the session, or the first CBF transmission followed by N CBF transmissions in the session). Each succeeding CBF transmission after the first may either be preceded by a compressed CBF setup phase, such as one involving only the CBF-trigger frame similar to that used in the initial setup phase, or may occur without any preceding CBF setup phase. Parameters affecting the succeeding CBF transmissions, including the participating STAs of either AP, the per-STA MCS and/or the per-STA Nss values, may all be established during the initial setup phase that precedes the first transmission and may remain constant for the duration of the N transmissions.

In some embodiments, each of the N transmissions may be followed by a CBF ACK sequence to acknowledge the MPDUs transmitted in the preceding CBF transmission. The APs may alternatively agree beforehand to defer the CBF ACK sequence until all N transmissions are completed and may inform their STAs of this arrangement. When such deferral is used, a single final CBF ACK sequence may acknowledge the MPDUs transmitted across all of the N CBF transmissions, thereby reducing overhead associated with repeated acknowledgment exchanges.

In some embodiments, during the intervals between successive CBF transmissions, there may be no ICF or ICR exchange between an AP and its STAs. This omission can reduce intermediate signaling and rely on the fact that the participating STAs and the corresponding transmission parameters have already been negotiated and fixed for the entire sequence of N transmissions.

In some embodiments, the Duration field in the MAC header of one or more frames transmitted in the initial setup phase, including one or more of the CBF-trigger, ICF, ICR, CBF-response, and/or CBF-invite frames, may be set to a value that protects the ensuing coordinated frame sequence by causing receiving devices to defer medium access. This protection may extend through all of the upcoming N CBF transmissions as well as the final CBF ACK sequence. When the APs agree to extend the TXOP to support the full sequence of N transmissions, the Duration field may be configured accordingly so that each of the protected transmissions and acknowledgment sequences can occur without interruption. This same approach may be repeated prior to each subsequent CBF transmission if needed for continued coordination and medium protection.

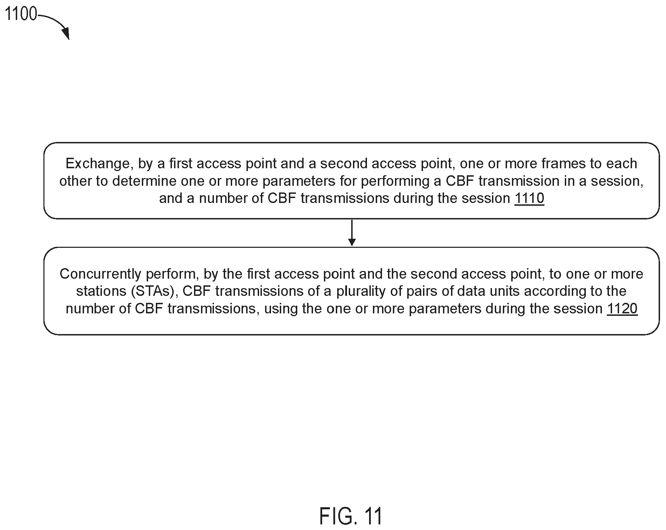

FIG. 11 is a flow diagram showing an example process 1100 for extending a CBF session by negotiating a number of CBF transmissions, according to some embodiments. In some embodiments, the process 1100 may perform coordinated beamforming (CBF) transmissions during a session. In some embodiments, the process 1100 is performed by one or more processors (e.g., the processor 121) of a device (e.g., the device 102, the network device 106, AP1 (201, 301), AP2 (202, 302), etc.). In other embodiments, the process 1100 is performed by other entities. In some embodiments, the process 1100 includes more, fewer, or different steps than shown in FIG. 11.

At step 1110, a first access point (e.g., one of AP1 201 and AP2 202) and a second access point (e.g., the other of AP1 201 and AP2 202) may exchange one or more frames (e.g., frames 211, 212, 213, 215, 217 in FIG. 2) to each other to determine one or more parameters for performing a CBF transmission (e.g., CBF PPDU 218, 219) in a session, and a number of CBF transmissions (e.g., a non-negative integer N) during the session. In some embodiments, the one or more parameters may include at least one of duration and/or length of CBF transmission/PPDU, one or more preamble contents of CBF PPDU, a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission.

In some embodiments, the term "number of CBF transmissions during a session" may refer to the quantity of coordinated transmissions that two or more access points agree to perform within a CBF session. This number may be negotiated explicitly, inferred from exchanged indicators, or dynamically reduced depending on traffic or capability constraints.

At step 1120, the first access point (e.g., AP1 301) and the second access point (e.g., AP2 302) may concurrently perform CBF transmissions of a plurality of pairs of data units (e.g., (N+1) CBF transmissions) according to the number of CBF transmissions, to one or more stations (STAs) using the one or more parameters during the session.

In some embodiments, the one or more parameters may be determined prior to the CBF transmissions of the plurality of pairs of data units. The plurality of pairs of data units may include a first pair of data units and N additional pairs of data units. The CBF transmissions of the plurality of pairs of data units may include a first CBF transmission of the first pair of data units followed by N additional CBF transmissions of the respective N additional pairs of data units.

In some embodiments, the plurality of pairs of data units across the first CBF transmission and the N additional CBF transmissions may be acknowledged by a single acknowledgment sequence deferred until after completion of the N additional CBF transmissions. The single acknowledgment sequence may include one or more MU BARs (e.g., MU BARs 514, 613, 615) and one or more TB PPDUs carrying BAs (e.g., TB PPDU with BAs 513, 515, 615, 616). The single acknowledgment sequence may acknowledge one or more data units transmitted to each STA over the N additional CBF transmissions.

In some embodiments, the term "acknowledgment sequence" may refer to a series of transmissions involving MU-BARs, TB PPDUs carrying BAs, or other acknowledgment-related frames that collectively indicate which data units in preceding CBF transmissions were successfully received by stations. Such acknowledgment sequences may occur after each CBF transmission or may be deferred to cover multiple transmissions.

In some embodiments, the term "single acknowledgment sequence" may refer to an acknowledgment phase that covers multiple CBF transmissions within a session, such that acknowledgment frames are deferred until a set of transmissions are complete. This sequence may include one or more MU-BARs and one or more BA-carrying TB PPDUs and may provide feedback for multiple data units transmitted across several CBF PPDUs.

In some embodiments, between successive CBF transmissions among the N additional CBF transmissions, at least one of the first access point or the second access point may perform no initial control frame/initial control response (ICF/ICR) exchange with the one or more STAs. In some embodiments, each CBF transmission among the N additional CBF transmissions may be preceded by an intermediate CBF trigger transmitted by the first access point or the second access point. In some embodiments, the intermediate CBF trigger can convey the duration or length of the upcoming CBF transmission.

In some embodiments, a first access point (e.g., AP1, AP2 shown in FIG. 2 or FIG. 3) may include a network interface and one or more processors. The one or more processors may exchange, by the network interface, one or more frames with a second access point to determine one or more parameters for performing a coordinated beamforming (CBF) transmission in a session, and a number of CBF transmissions during the session. The one or more processors may perform, by the network interface to one or more stations (STAs), CBF transmissions of a plurality of data units according to the number of CBF transmissions, using the one or more parameters during the session.

In some embodiments, the one or more parameters may include at least one of duration and/or length of CBF transmission/PPDU, one or more preamble contents of CBF PPDU, a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission. In some embodiments, the one or more parameters may be determined prior to the CBF transmissions of the plurality of data units.

In some embodiments, the number of CBF transmissions may be N which is a non-negative integer. For example, for N=0, zero additional data units are transmitted after the first data unit. The plurality of data units may include a first data unit and N additional data units. The CBF transmissions of the plurality of data units may include a first CBF transmission of the first data unit followed by N additional CBF transmissions of the respective N additional data units. The plurality of data units across the first CBF transmission and the N additional CBF transmissions may be acknowledged by a single acknowledgment sequence deferred until after completion of the N additional CBF transmissions. The single acknowledgment sequence may include at least one of one or more MU BARs or one or more TB PPDUs carrying BAs. The single acknowledgment sequence may acknowledge one or more data units transmitted to each STA over the N additional CBF transmissions. In some embodiments, there may be an ACK sequence after M (<=N+1) CBF transmissions (M is a positive integer).

In some embodiments, between successive CBF transmissions among the N additional CBF transmissions, the one or more processors may perform no initial control frame/initial control response (ICF/ICR) exchange with the one or more STAs. In some embodiments, the one or more processors may transmit or receive an intermediate CBF trigger preceding each of the N additional CBF transmissions. In some embodiments, each intermediate CBF trigger can convey the duration or length of the upcoming CBF transmission.

In some embodiments, a first access point (e.g., AP1, AP2 shown in FIG. 2 or FIG. 3) may a network interface and one or more processors. The one or more processors may transmit, by the network interface, to a second access point, a first frame indicating a first non-negative integer. The one or more processors may receive, by the network interface, from the second access point, a second frame indicating a second non-negative integer. The one or more processors may determine, as a number of coordinated beamforming (CBF) transmissions performed during a session, a minimum of the first positive integer and the second positive integer. For example, for N=0, zero additional data units are transmitted after the first data unit. In response to determining that the number of CBF transmissions is a positive integer, the one or more processors may perform, by the network interface to one or more stations (STAs), CBF transmissions of a plurality of data units according to the number of CBF transmissions, during the session.

In some embodiments, the one or more parameters may be determined prior to the CBF transmissions of the plurality of data units.

In some embodiments, the number of CBF transmissions may be N which is a non-negative integer. For example, for N=0, 0 additional data units are transmitted after the first data unit. The plurality of data units may include a first data unit and N additional data units. The CBF transmissions of the plurality of data units may include a first CBF transmission of the first data followed by N additional CBF transmissions of the respective N additional data units.

In some embodiments, the plurality of data units across the first CBF transmission and the N additional CBF transmissions may be acknowledged by a single acknowledgment sequence deferred until after completion of the N additional transmissions. The single acknowledgment sequence may include at least one of one or more MU BARs or one or more TB PPDUs carrying BAs. The single acknowledgment sequence may acknowledge one or more data units transmitted to each STA over the N additional CBF transmissions. In some embodiments, there may be an ACK sequence after M (<=N+1) CBF transmissions (M is a positive integer).

In some embodiments, between successive CBF transmissions among the N additional CBF transmissions, the one or more processors may perform no ICF/ICR exchange with the one or more STAs. In some embodiments, the one or more processors may transmit or receive an intermediate CBF trigger preceding each of the N additional CBF transmissions. In some embodiments, each intermediate CBF trigger can convey the duration or length of the upcoming CBF transmission.

### 4. Session Extension Frame Sequences By APs Alternately Transmitting Trigger Frames

In some embodiments, in a CBF session-extension procedure, each CBF transmission in the CBF session may be preceded by a CBF-trigger transmitted by one of the APs (e.g., AP1 or AP2 in FIG. 2). The responsibility for transmitting the CBF-trigger may alternate between the APs so that, for example, one AP transmits the first, third, and fifth CBF-triggers in the session while the other AP transmits the second, fourth, and sixth CBF-triggers. This alternating pattern may provide a structured sequence in which each AP, when acting as the transmitter of a CBF-trigger, indicates in the CBF-trigger a number drawn from a set of values such as {0, 1, 2} that specifies how many future CBF transmissions (or remaining CBF transmissions in the session) that AP is able to participate in based on its traffic availability or other relevant constraints. For example, when the number is zero, the CBF-trigger may indicate that the CBF session terminates immediately after the CBF-trigger; when the number is one, the CBF-trigger may indicate that the CBF transmission following that CBF-trigger becomes the last CBF transmission in the session; and when the number is two, the CBF-trigger may indicate that the other AP becomes responsible for transmitting the next CBF-trigger after the completion of the CBF transmission that follows the current CBF-trigger.

In some embodiments, when the number is two, the first AP can perform two CBF transmissions, and might be able to still do more after that. In some embodiments, when the number is two, the first AP may not know initially that it can support more than 2 transmissions, but it may be able to make that determination at a future time (e.g., after the second CBF transmission). In some embodiments, after a first CBF transmission, the second AP transmits the trigger indicating support for second and third CBF transmissions. After the second transmission (supported by both APs), it is the first AP's turn to transmit the trigger. If the first AP has by now determined that it can support the third transmission as well, it can transmit a CBF trigger indicating support for the third (and possibly more) transmission(s), thereby continuing the chain. Otherwise, the first AP would transmit a trigger indicating it cannot continue and thereby terminate the session.

In some embodiments, the CBF-trigger may be transmitted as a standalone frame, in which case the next CBF transmission may occur at SIFS after the CBF-trigger frame. Alternatively, the CBF-trigger may be embedded within the CBF ACK sequence associated with the preceding CBF transmission. In such cases, the CBF-trigger may be embedded within an MU-BAR frame transmitted by an AP to its STAs so that the other AP is informed concurrently, or it may be transmitted alongside TB BAs from STAs associated with the other AP. These embedding options can allow the CBF-trigger to serve both as an acknowledgment-sequence element and as an inter-AP coordination signal.

In some embodiments, the APs may negotiate in advance an arrangement to defer the CBF ACK sequence until multiple CBF transmissions within the session have been completed. When a deferred CBF ACK sequence is negotiated, the CBF ACK sequence may be deferred until such time when at least one of the APs cannot continue CBF transmissions without receiving ACKs or BAs from its STAs or when one AP has no remaining pending traffic. When this approach is taken, the APs may inform their respective STAs that a single CBF ACK sequence will be used to acknowledge data MPDUs transmitted over multiple CBF transmissions within the session. If an AP becomes unable to continue with further CBF transmissions until ACKs or BAs are received from its STAs, it may convey this constraint in its CBF-trigger, prompting the initiation of a CBF ACK sequence such as CBF ACK frame sequence 400, 500, 600 shown in FIGS. 4-6.

In some embodiments, during the intervals between successive CBF transmissions within the same CBF session, there may be no ICF or ICR exchange between each AP and its respective STAs. The absence of such intermediate AP-STA control signaling is made possible because coordination between the APs is maintained through the alternating CBF-trigger frames, as well as the information they convey regarding each AP's ability to continue participating in the session.

In some embodiments, the Duration field in the MAC header of one or more frames transmitted during the initial setup phase, including the CBF-trigger, ICF, ICR, CBF-response, or CBF-invite, may be configured to protect the ensuing frame sequence by causing receivers to defer medium access until the completion of one or more upcoming CBF transmissions, the associated CBF ACK sequence if present, and the next CBF-trigger. When the APs agree to extend the TXOP to include a second CBF transmission, the Duration field in the second CBF-trigger may be set to provide protection for the second CBF transmission, the associated CBF ACK sequence, and the subsequent CBF-trigger that may follow. This same protection mechanism may be repeated prior to each subsequent CBF transmission to ensure continuous medium reservation for the entire session.

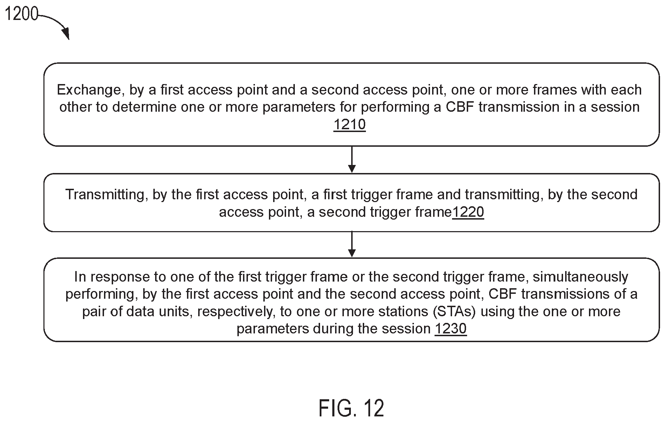

FIG. 12 is a flow diagram showing an example process 1200 for extending a CBF session by access points (APs) alternately transmitting trigger frames, according to some embodiments. In some embodiments, the process 1200 may perform coordinated beamforming (CBF) transmissions during a session. In some embodiments, the process 1200 is performed by one or more processors (e.g., the processor 121) of a device (e.g., the device 102, the network device 106, AP1 (201, 301), AP2 (202, 302), etc.). In other embodiments, the process 1200 is performed by other entities. In some embodiments, the process 1200 includes more, fewer, or different steps than shown in FIG. 12.

At step 1210, a first access point (e.g., one of AP1 201 and AP2 202) and a second access point (e.g., the other of AP1 201 and AP2 202) may exchange one or more frames (e.g., frames 211, 212, 213, 215, 217 in FIG. 2) to each other to determine one or more parameters for performing a CBF transmission (e.g., CBF PPDU 218, 219) in a session. In some embodiments, the one or more parameters may include at least one of duration and/or length of CBF transmission/PPDU, one or more preamble contents of CBF PPDU, a set of access points participating in a CBF transmission during the session, a set of STAs addressed by the CBF transmission, MCS used for a STA in the CBF transmission, a number of spatial streams used for a STA in the CBF transmission, or a set of nulling directions used by an access point in the CBF transmission.

At step 1220, the first access point may transmit a first trigger frame and the second access point may transmit a second trigger frame. In some embodiments, the first trigger frame and the second trigger frame may be alternately transmitted. In some embodiments, the term "two access points alternately transmitting a trigger frame" may describe a coordinated pattern in which APs take turns sending triggers that initiate the next aligned CBF transmission. This alternation may continue through multiple transmissions and may reflect negotiation regarding remaining capability or willingness to participate.

At step 1230, in response to one of the first trigger frame or the second trigger frame, the first access point and the second access point may concurrently perform CBF transmissions of a pair of data units, respectively, to one or more stations (STAs) using the one or more parameters during the session. In some embodiments, the pair of data units may be transmitted within a SIFS after the first trigger frame or the second trigger frame is transmitted. In some embodiments, the one or more parameters may be determined prior to the CBF transmissions of the pair of data units.

In some embodiments, during the session, a plurality of data units including the pair of data units may be acknowledged by an acknowledgment sequence deferred until after completion of CBF transmissions of the plurality of data units. In some embodiments, there may be an ACK sequence after every CBF transmission. The acknowledgment sequence may include at least one of one or more MU BARs or one or more TB PPDUs carrying BAs.

In some embodiments, at least one of the first trigger frame or the second trigger frame may be embedded within an acknowledgment sequence following a preceding CBF transmission of a data unit. The acknowledgment sequence may include at least one of one or more MU BARs or one or more TB PPDUs carrying BAs.

In some embodiments, during the session, between successive CBF transmissions among a plurality of data units including the pair of data units, the one or more processors may perform no ICF/ICR exchange with the one or more STAs.

In some embodiments, a first access point (e.g., AP1, AP2 shown in FIG. 2 or FIG. 3) may include a network interface and one or more processors. The one or more processors may exchange, by the network interface, one or more frames with a second access point to determine one or more parameters for performing a coordinated beamforming (CBF) transmission in a session, and a first order of the first access point and the second access point transmitting trigger frames for next CBF transmissions. The one or more processors may transmit, by the network interface, a first trigger frame according to the first order, and then perform a CBF transmission of a first data unit to one or more stations (STAs) using the one or more parameters during the session. In response to receiving, from the second access point, a second trigger frame according to the first order, the one or more processors may perform a CBF transmission of a second data unit to the one or more STAs using the one or more parameters during the session. In some embodiments, in the first order, the first access point and the second access point may alternately transmit the trigger frames for the next CBF transmissions.

In some embodiments, the first data unit may be transmitted within a SIFS after the first trigger frame is transmitted. In some embodiments, the one or more parameters may include at least one of duration and/or length of the CBF transmission/PPDU, one or more preamble contents of CBF PPDU, a set of access points participating in a CBF transmission during the session, a set of STAs addressed by the CBF transmission, MCS used for a STA in the CBF transmission, a number of spatial streams used for a STA in the CBF transmission, or a set of nulling directions used by an access point in the CBF transmission. In some embodiments, the one or more parameters may be determined prior to the CBF transmissions of the first data unit and the second data unit.

In some embodiments, during the session, a plurality of data units including the first data unit and the second data unit may be acknowledged by an acknowledgment sequence deferred until after completion of CBF transmissions of the plurality of data units. The acknowledgment sequence may include at least one of one or more MU BARs or one or more TB PPDUs carrying BAs.

In some embodiments, at least one of the first trigger frame or the second trigger frame may be embedded within an acknowledgment sequence following a preceding CBF transmission of a data unit. The acknowledgment sequence may include at least one of one or more MU BARs or one or more TB PPDUs carrying BAs.

In some embodiments, during the session, between successive CBF transmissions among a plurality of data units including the first data unit and the second data unit, the one or more processors may perform no ICF/ICR exchange with the one or more STAs.

In some embodiments, a first access point (e.g., AP1, AP2 shown in FIG. 2 or FIG. 3) may a network interface and one or more processors. The one or more processors may exchange, by the network interface, one or more frames with a second access point to determine one or more parameters for performing a coordinated beamforming (CBF) transmission in a session. The one or more processors may transmit, by the network interface, a first message indicating a first number of remaining CBF transmissions in which the first access point can participate, and determine, based on the first number of remaining CBF transmissions, whether to perform a CBF transmission of a first data unit using the one or more parameters during the session. The one or more processors may receive, by the network interface, a second message indicating a second number of remaining CBF transmissions in which the second access point can participate, and determine, based on the second number of remaining CBF transmissions, whether to perform a CBF transmission of a second data unit using the one or more parameters during the session. In some embodiments, the first message may be carried in a first trigger frame, and the second message may be carried in a second trigger frame.

In some embodiments, the term "remaining CBF transmissions" may refer to the number of future coordinated beamforming transmissions that an access point indicates it is still able or willing to perform during the current session. This information may be included in a trigger frame or other signaling and may guide whether a session continues or terminates after the current transmission.

In some embodiments, the one or more processors may select, as the first number, a value from a first value, a second value, or a third value. The first value may indicate that the session is terminated following the first trigger frame. The second value may indicate that only a single CBF transmission follows the first trigger frame. The session may be terminated following the single CBF transmission. The third value may indicate that a CBF transmission follows the first trigger frame, and the second access point may transmit a next trigger after the CBF transmission following the first trigger frame.

In some embodiments, the one or more parameters may include at least one of duration and/or length of the CBF transmission/PPDU, one or more preamble contents of CBF PPDU, a set of access points participating in a CBF transmission during the session, a set of STAs addressed by the CBF transmission, MCS used for a STA in the CBF transmission, a number of spatial streams used for a STA in the CBF transmission, or a set of nulling directions used by an access point in the CBF transmission.

In some embodiments, during the session, a plurality of data units may be acknowledged by an acknowledgment sequence deferred until after completion of CBF transmissions of the plurality of data units. The acknowledgment sequence may include at least one of one or more MU BARs or one or more TB PPDUs carrying BAs.

In some embodiments, at least one of the first trigger frame or the second trigger frame may be embedded within an acknowledgment sequence following a preceding CBF transmission of a data unit. The acknowledgment sequence may include one or more MU BARs and one or more TB PPDUs carrying BAs.

In some embodiments, during the session, between successive CBF transmissions among a plurality of data units including the first data unit and the second data unit, the one or more processors may perform no ICF/ICR exchange with the one or more STAs.

### 5. A Multi-AP CBF Mechanism (with Sharing AP and Shared AP)

### 5-1. CBF frame sequence

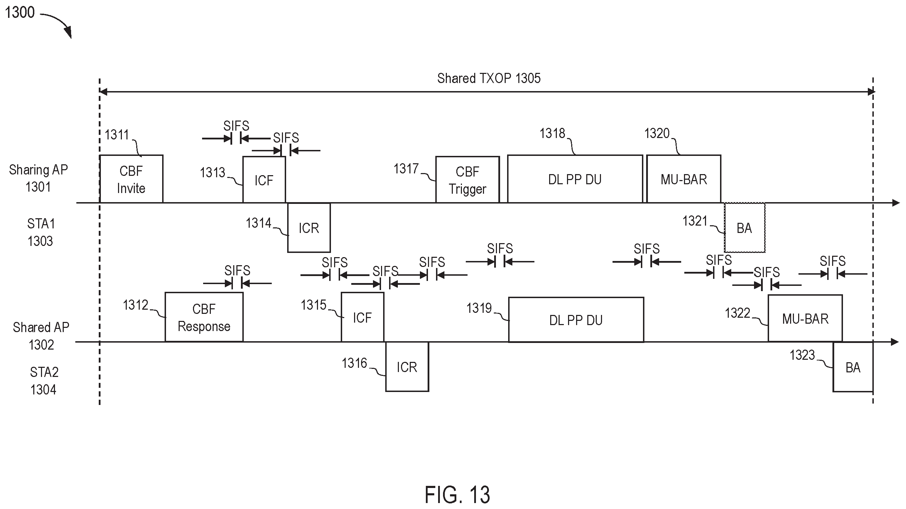

FIG. 13 is an example frame sequence 1300 between a sharing AP 1301 and a shared AP 1302 during a CBF transmission, according to some embodiments. FIG. 13 depicts a coordinated beamforming exchange within a shared TXOP 1305 involving the sharing AP 1301, the shared AP 1302, and their associated client stations STA1 1303 and STA2 1304. In the frame sequence 1300, the sharing AP 1301 and the shared AP 1302 coordinate with their respective stations STA1 1303 and STA2 1304 prior to a coordinated beamforming downlink (e.g., DL PPDU 1318, 1319). In this sequence, the sharing AP initiates with a CBF-invite 1311, the shared AP responds with a CBF-response 1312 at SIFS time from the end of the CBF-invite. The AP-to-STA readiness is established through an ICF 1313 and ICR 1314 exchange for the sharing AP/STA1, and through an ICF 1315 and ICR 1316 exchange for the shared AP/STA2. After these handshakes, the sharing AP transmits a CBF-trigger 1317 to the shared AP following SIFS timing, providing the shared AP with alignment information for the ensuing synchronous transmission. Subsequently, following SIFS timing, both APs perform their coordinated downlink physical layer protocol data units (CBF PPDUs) 1318 and 1319. Following the CBF PPDUs, the sharing AP transmits an MU-BAR 1320 and receives a BA 1321. After another SIFS, the shared AP transmits its MU-BAR 1322 and then receives a BA 1323.

In some embodiments, the term "sharing AP" may refer to an access point that initiates or coordinates certain aspects of a multi-AP communication procedure, including but not limited to generating, transmitting, or scheduling particular frames associated with a coordinated beamforming session. For example, a sharing AP may be primarily the holder of the TXOP, e.g., the AP which has won channel access in order to initiate the CBF transmission. In some embodiments, sharing-shared AP roles can interchange solely based on who gets channel access. In various embodiments, a sharing AP may participate in determining which client devices are addressed in a coordinated transmission, may originate one or more trigger frames used to align or manage joint transmissions, or may otherwise provide signaling that enables additional access points to determine how and when to engage in the coordinated exchange. The sharing AP may take on responsibilities related to managing the progression of a multi-AP session, such as indicating whether subsequent transmissions are expected, whether acknowledgments should be elicited in a particular format, or whether additional coordination steps are required. Depending on system design and operational conditions, the entity acting as the sharing AP could vary across sessions or even across individual transmissions, and the role need not be limited to a specific hardware configuration or network topology.

In some embodiments, the term "shared AP" may refer to an access point that collaborates with the sharing AP during the coordinated transmission process and that uses the information conveyed by the sharing AP to prepare its own corresponding transmissions or responses. In certain embodiments, a shared AP may interpret signaling that identifies timing, acknowledgment expectations, or continuation parameters for a coordinated beamforming exchange. The shared AP may transmit its own trigger frames, acknowledgments, or control information based on the indications it receives, and may similarly communicate whether it is able or willing to continue participating in the ongoing coordinated session. A shared AP may also manage interactions with its associated client devices during the coordinated exchange, including receiving or soliciting acknowledgments or other uplink responses. As with the sharing AP, the role of a shared AP is not limited to any particular device type or architecture, and different access points may assume the role of a shared AP under varying network conditions or session structures.

Referring to FIG. 13, the CBF frame sequence 1300 reflects an approach in which sequential ACKs from the sharing AP's clients and the shared AP's clients are used to complete the acknowledgment phase of each coordinated transmission. This sequence has gained widespread support because it maintains compatibility with baseline behavior while allowing efficient coordination between the sharing AP and the shared AP during a CBF exchange. In some arrangements/embodiments, the first MU-BAR 1320 transmitted by the sharing AP 1301 may be embedded within the preceding downlink PPDU, consistent with baseline implementations that incorporate BA-eliciting information directly into the DL PPDU.

In some embodiments, it can be indicated which method the sharing AP will use to fetch BAs from its addressed CBF clients. For example, it can be indicated whether the sharing AP intends to transmit a separate MU-BAR or instead embed the MU-BAR information in the preceding DL PPDU. This distinction can affect how the shared AP interprets the L-SIG duration and UL-length fields and determines when the shared AP should transmit its own MU-BAR to its clients. It can also affect whether the duration of the acknowledgement procedure in the sharing AP BSS is required to be indicated separately or can be inferred by the shared AP itself.

In some embodiments, it can be determined whether to continue the TXOP after receipt of the BA transmitted by the shared AP's clients. Because it is desirable for coordinated beamforming to transmit multiple successive CBF PPDUs in a TXOP, the sharing AP and the shared AP may determine whether another CBF PPDU will follow the BA sequence, and coordinate on whether to continue the CBF session. Proper signaling of continuation intent can ensure that both APs act consistently with respect to issuing or refraining from issuing a subsequent CBF trigger.

In some embodiments, extended timeout handling for the addressed CBF clients of both the sharing AP and the shared AP may be determined. CBF clients operating in EMLSR or DPS modes can remain in extended listening states while awaiting a potential next CBF PPDU. In the absence of an explicit indication as to whether another transmission will follow, these clients may consume unnecessary power or remain unavailable for other channel-access opportunities. By appropriately communicating whether the CBF session will continue or terminate through, for example, embedded triggers or MU-BAR Common/Special User Info fields, clients can manage their extended timeout behavior more effectively and align their power-save state transitions with the actual boundary of the CBF session.

### 5-2. MU-BAR information transmitted by the sharing AP

In some embodiments, in the context of coordinated beamforming, the sharing AP can employ two distinct methods to transmit MU-BAR information and elicit BAs corresponding to a given CBF PPDU from its addressed CBF clients. The sharing AP may transmit a separate MU-BAR at SIFS after completion of the CBF PPDU, or it may embed the MU-BAR information directly within the CBF PPDU that it transmits to its clients. Because these approaches differ in timing and in the cues available to the peer AP, the shared AP may need to know in advance which method the sharing AP intends to use.

In some embodiments, when the MU-BAR is transmitted separately, the shared AP is able to determine the expected MU-BAR timing based on the UL_length included in the MU-BAR and the L-SIG of the BA transmitted by the sharing AP's clients. When instead the MU-BAR information is embedded in the downlink PPDU, the shared AP can infer the corresponding timing solely from the L-SIG of the BA transmitted by the sharing AP's clients unless the embedding method is additionally indicated in the associated CBF-trigger. This distinction may affect how the shared AP schedules its own MU-BAR transmission, because it may need to transmit its MU-BAR at SIFS after the BA from the sharing AP's clients, and may need to ensure that this timing is aligned to the sharing AP's chosen BA-elicitation method.

In some embodiments, the shared AP may need to determine whether the CBF PPDU associated with the MU-BAR is the final CBF PPDU that the sharing AP intends to transmit in the current TXOP. Using this knowledge, the shared AP can manage the extended timeout behavior of its associated CBF clients and decide how to proceed with transmissions on its other links. If the sharing AP does not plan additional CBF PPDUs, the shared AP may need to initiate steps to terminate extended timeout states and to reallocate channel access for other transmissions.

For these reasons, the sharing AP may provide an explicit indication of the method it will use to fetch BAs for each CBF PPDU, specifying whether the MU-BAR information is embedded in the CBF PPDU or transmitted as a separate MU-BAR. To maintain flexibility, this indication need not be part of any negotiation in the CBF setup or the initial handshake in a CBF TXOP. Instead, the indication may form part of the CBF-trigger corresponding to the CBF PPDU so that the shared AP is informed of the BA-fetching method that the sharing AP will employ for the ensuing CBF PPDU. The CBF-trigger may therefore contain a BA-method field for the sharing AP, which is set to zero when ACKs will be fetched using a separate MU-BAR and is set to one when ACKs will be fetched using the embedded trigger in the CBF PPDU.

### 5-3. Continuation of the TXOP

In some embodiments, in a CBF TXOP, the initial handshake exchanged between the APs and their associated CBF clients may introduce non-trivial overhead, making it desirable to permit multiple CBF PPDUs to be transmitted within the same CBF TXOP rather than restarting the setup procedure for each PPDU. To support this operation, it may be assumed that the set of CBF clients for both the sharing AP and the shared AP, as well as their corresponding transmission parameters, remain constant throughout the duration of the CBF TXOP (or throughout the session). Under this assumption, the parameters exchanged and computed for the first CBF PPDU can continue to apply to all subsequent CBF PPDUs that occur within the same TXOP (or within the same session). The only parameter that may vary across these PPDUs may be the duration of the CBF PPDU itself, represented by its L-SIG length, which may differ from one PPDU to the next. Because the participating APs rely on previously established parameters, additional rounds of CBF-invite and CBF-response exchanges or ICF/ICR exchanges with the CBF clients are not required for the subsequent CBF PPDUs.

Given these conditions, in some embodiments, the only frame that is present between the BA transmitted by the shared AP's clients for one CBF PPDU and the start of the next CBF PPDU may be the CBF-trigger frame. The CBF-trigger may carry, at minimum, an indication of whether the BAs associated with the upcoming PPDU will be fetched by the sharing AP using a separate MU-BAR or using an embedded trigger in the CBF PPDU itself. This CBF-trigger may be transmitted only when both the sharing AP and the shared AP agree to continue transmitting further CBF PPDUs within the same TXOP. The decision to continue may depend on several factors, including the availability of data for the CBF clients, the known availability or unavailability of the CBF clients, the validity of the CBF transmission parameters, and/or whether sufficient duration remains within the maximum TXOP limit for an additional PPDU and its corresponding acknowledgment sequence. Since the sharing AP alone knows the maximum TXOP length, its internal constraints can also influence this continuation decision.

In some embodiments, to achieve synchronized continuation decisions, both APs can communicate their readiness to proceed with additional CBF transmissions. This exchange may or must occur before the next CBF-trigger is transmitted. The sharing AP may convey its readiness within the CBF-trigger or, if a separate MU-BAR is used, within that MU-BAR, because any indication placed inside a CBF PPDU can be heard only by the CBF clients and not by the shared AP. Correspondingly, the shared AP may communicate its readiness through the MU-BAR it transmits to its own CBF clients. These mechanisms can ensure that each AP has timely knowledge of the other's willingness and ability to continue the coordinated session.

In some embodiments, the CBF-trigger or MU-BAR transmitted by the sharing AP may contain a field designated as CBF-continue, which is detectable by the shared AP. When the sharing AP does not transmit a separate MU-BAR, the CBF-trigger itself may carry the CBF-continue field. When a separate MU-BAR is transmitted, the MU-BAR can carry the CBF-continue field instead, giving the sharing AP additional time to collect information, such as newly arrived data for its CBF clients, before deciding whether to proceed with another CBF PPDU. The CBF-continue field may be set to zero when the sharing AP does not intend to transmit further CBF PPDUs and the current PPDU is the final one in the session; it may be set to one when the sharing AP intends to transmit additional CBF PPDUs in the same TXOP, assuming that the shared AP also agrees to continue.

In some embodiments, the MU-BAR transmitted by the shared AP may contain a CBF-continue field that is heard by the sharing AP. This field may be set to zero when the shared AP does not intend to transmit further CBF PPDUs, either because it has no more data to send or because the sharing AP has already transmitted a CBF-continue equal to zero. The field may be set to one when the shared AP intends to participate in additional CBF PPDUs and the sharing AP has likewise signaled CBF-continue equal to one. In some embodiments, when both APs transmit CBF-continue equal to one, the sharing AP may or must transmit the next CBF-trigger at SIFS following the BA transmitted by the shared AP's clients. In some embodiments, if either AP transmits CBF-continue equal to zero, the sharing AP does not transmit any additional CBF-trigger at SIFS after that BA, thereby terminating the CBF session for the current TXOP. Any remaining portion of the TXOP may then be used by the sharing AP for non-CBF transmissions.

### 5-4. Extended timeout handling for the addressed CBF clients

Through the schemes described in the previous section, In some embodiments, by the end of the BA transmitted by the clients of the shared AP corresponding to CBF PPDU n, both the sharing AP and the shared AP can be deterministically aware of whether a CBF-trigger will occur for CBF PPDU (n+1). This deterministic awareness can follow from the exchange of the CBF-continue indications and ensure that each AP has a definitive view of session continuation before any subsequent SIFS-spaced control or data activity.

In some embodiments, as part of the extended timeout behavior of the CBF clients which have EMLSR/DPS enabled, CBF clients of both the sharing AP and the shared AP may continue to wait for subsequent CBF PPDUs even if both APs have decided to discontinue the session. This continued waiting may consume power and, in the case of EMLSR, also may cause clients to lose channel access diversity while they remain in an elevated readiness state for a transmission that will not occur. Hence, in some embodiments, explicit handling of the extended timeout of CBF clients can be provided after the last CBF PPDU so that clients can promptly exit extended listening and return to their baseline power-save behavior.

To that end, in some embodiments, any CBF-continue transmitted within the MU-BAR of the sharing AP or the shared AP may be also read by the respective AP's clients, which is why the indication is placed in the Common/Special User Info field. For the case in which the sharing AP does not transmit a separate MU-BAR and therefore transmits CBF-continue in the CBF-trigger itself, the same indication may be replicated in the CBF-PPDU for the sharing AP's clients. This replication may be carried inside the embedded trigger frame that elicits the BA so that the sharing AP's clients receive the continuation state regardless of whether a separate MU-BAR is present.

In some embodiments, the embedded trigger frame to fetch BA that is transmitted by the sharing AP may therefore carry a CBF-continue field. If the sharing AP transmits CBF-continue in the CBF-trigger, it may also transmit the same value of CBF-continue in the trigger embedded in the corresponding CBF PPDU. This consistency can ensure that both APs and all addressed clients observe the same session-continuation state for CBF PPDU n and can align their post-BA behavior accordingly.

In some embodiments, when the sharing AP transmitted CBF-continue=1 in its CBF-PPDU/MU-BAR corresponding to CBF PPDU n and the shared AP transmitted CBF-continue=1 in its MU-BAR corresponding to CBF PPDU n, the CBF-trigger for CBF PPDU n+1 may be transmitted by the sharing AP. In this case, the clients of the sharing AP may continue their extended timeout behavior based on reading CBF-continue=1 in the sharing AP's embedded Trigger frame within the CBF-PPDU or MU-BAR, and the clients of the shared AP may continue their extended timeout behavior based on reading CBF-continue=1 in the shared AP's MU-BAR.

In some embodiments, if the sharing AP transmitted CBF-continue=0 in the embedded Trigger frame within its CBF-PPDU or MU-BAR corresponding to CBF PPDU n, the shared AP is not allowed to transmit CBF-continue=1 in its MU-BAR corresponding to CBF PPDU n, and therefore such a combination is not valid. This prohibition can prevent contradictory continuation states and preserves a single authoritative termination decision when issued by the sharing AP.

In some embodiments, when the sharing AP transmitted CBF-continue=0 in its CBF-PPDU/MU-BAR corresponding to CBF PPDU n and the shared AP transmitted CBF-continue=0 in its MU-BAR corresponding to CBF PPDU n, no CBF-trigger or CBF PPDU n+1 may be transmitted. In this termination case, the clients of the sharing AP may abort their extended timeout behavior upon reading CBF-continue=0 in the sharing AP's CBF-PPDU/MU-BAR, and the clients of the shared AP may abort their extended timeout behavior upon reading CBF-continue=0 in the shared AP's MU-BAR.

In some embodiments, when the sharing AP transmitted CBF-continue=1 in its CBF-PPDU/MU-BAR corresponding to CBF PPDU n and the shared AP transmitted CBF-continue=0 in its MU-BAR corresponding to CBF PPDU n, no CBF-trigger or CBF PPDU n+1 may be transmitted because continuation requires both APs to agree. In this asymmetric condition, the clients of the sharing AP may continue their extended timeout behavior based on reading CBF-continue=1 in the sharing AP's CBF-PPDU/MU-BAR, which would otherwise leave them waiting unnecessarily.

For the benefit of these clients, in some embodiments, a CBF-terminate indication may be transmitted by the sharing AP after the BA transmitted by the shared AP's clients. The CBF-terminate indication may be carried in a standalone frame that serves as the last frame in the TXOP or, if the sharing AP elects to use the remainder of the TXOP for non-CBF transmissions, may be embedded explicitly or implicitly in the first frame that initiates such transmissions. Having received this CBF-terminate indication, the sharing AP's clients may abort their extended timeout behavior and fall back to their regular eMLSR/DPS timeout behavior, while the clients of the shared AP may have already aborted their extended timeout behavior based on reading CBF-continue=0 in the shared AP's MU-BAR.

### 6. Advantages

Embodiments in the present disclosure have at least the following advantages and benefits. First, embodiments in the present disclosure can establish a session to allow the participating access points to reuse previously negotiated parameters across multiple CBF transmissions without repeating the multi-frame setup overhead that normally precedes each transmission. By allowing several CBF PPDUs to occur consecutively within a single session and by relying on a single CBF-trigger between successive PPDUs, the system can reduce the frequency of initial handshakes and control exchanges described in the setup procedure, which increases the amount of airtime available for downlink data and improves transmission efficiency. The session model can therefore support longer, more continuous coordinated beamforming activity while avoiding the constraints that arise when each CBF PPDU is preceded by a full invite and response sequence.

Second, embodiments in the present disclosure can provide the mechanisms that allow the session to be extended after each CBF transmission. In some embodiments, the access points exchange CBF-continue indications, either through standalone frames or frames embedded within acknowledgment traffic, to signal their ability and willingness to participate in another coordinated transmission. Because these indications are delivered with deterministic timing and because both devices evaluate one another's continuation status before the next trigger opportunity, the system can ensure that successive CBF transmissions occur only when both sides have traffic and capability to proceed. This explicit continuation signaling can prevent ambiguous waiting intervals and enables rapid sequencing of additional CBF PPDUs, which enhances responsiveness and stability during ongoing multi-AP coordination. The explicit continuation also prevents error scenarios where for example, shared AP is assumed to be continuing the CBF session but actually has no data and/or no available clients due to which it does not participate in those subsequent exchanges thus leaving long undesirable gaps in the medium during which any other devices can enter the channel. Such a one-sided continuation also reduces spectral efficiency since only the sharing AP would be transmitting.

Third, embodiments in the present disclosure can allow the extended session signaling to improve the behavior of the stations associated with each access point. When continuation information is propagated through MU-BAR frames or embedded triggers, stations that rely on extended-timeout operation can determine whether a further CBF PPDU is expected and can maintain or exit their elevated receive readiness accordingly. In some embodiments, a termination indication can be transmitted when only one access point can continue, enabling stations to promptly revert to their baseline listen or power-save state rather than waiting for a transmission that will not occur. This alignment between session-extension signaling and station power-management requirements can reduce unnecessary energy expenditure and preserve predictable reception timing throughout the multi-PPDU session.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.
The invention further provides the following embodiments:
1. A first access point comprising:
   a network interface; and
   one or more processors configured to:
      exchange, by the network interface, one or more frames with a second access point to determine one or more parameters for performing a coordinated beamforming (CBF) transmission in a session, and a number of CBF transmissions during the session; and
      perform, by the network interface to one or more stations (STAs), CBF transmissions of a plurality of data units according to the number of CBF transmissions, using the one or more parameters during the session.
2. The first access point of embodiment 1, wherein the one or more parameters comprises at least one of a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission.
3. The first access point of embodiment 1, wherein the one or more parameters are determined prior to the CBF transmissions of the plurality of data units.
4. The first access point of embodiment 1, wherein
   the number of CBF transmissions is N which is a non-negative integer,
   the plurality of data units comprises a first data unit and N additional data units, and
   the CBF transmissions of the plurality of data units comprise a first CBF transmission of the first data unit followed by N additional CBF transmissions of the respective N additional data units.
5. The first access point of embodiment 4, wherein
   the plurality of data units across the first CBF transmission and the N additional CBF transmissions are acknowledged by a single acknowledgment sequence deferred until after completion of the N additional CBF transmissions, and
   the single acknowledgment sequence comprises at least one of one or more multi-user block acknowledgment requests (MU-BARs) or one or more trigger-based (TB) physical layer protocol data units (PPDUs) carrying block acknowledgments (BAs).
6. The first access point of embodiment 5, wherein the single acknowledgment sequence acknowledges one or more data units transmitted to each STA over the N additional CBF transmissions.
7. The first access point of embodiment 4, wherein between successive CBF transmissions among the N additional CBF transmissions, the one or more processors are configured to perform no initial control frame/initial control response (ICF/ICR) exchange with the one or more STAs.
8. A first access point comprising:
   a network interface; and
   one or more processors configured to:
      transmit, by the network interface, to a second access point, a first frame indicating a first non-positive integer;
      receive, by the network interface, from the second access point, a second frame indicating a second non-positive integer;
      determine, as a number of coordinated beamforming (CBF) transmissions performed during a session, a minimum of the first positive integer and the second positive integer; and
      in response to determining that the number of CBF transmissions is a positive integer, perform, by the network interface to one or more stations (STAs), CBF transmissions of a plurality of data units according to the number of CBF transmissions, during the session.
9. The first access point of embodiment 8, wherein the one or more parameters are determined prior to the CBF transmissions of the plurality of data units.
10. The first access point of embodiment 8, wherein
   the number of CBF transmissions is N which is a non-negative integer,
   the plurality of data units comprises a first data unit and N additional data units, and
   the CBF transmissions of the plurality of data units comprise a first CBF transmission of the first data followed by N additional CBF transmissions of the respective N additional data units.
11. The first access point of embodiment 10, wherein
   the plurality of data units across the first CBF transmission and the N additional CBF transmissions are acknowledged by a single acknowledgment sequence deferred until after completion of the N additional transmissions, and
   the single acknowledgment sequence comprises at least one of one or more multi-user block acknowledgment requests (MU-BARs) or one or more trigger-based (TB) physical layer protocol data units (PPDUs) carrying block acknowledgments (BAs).
12. The first access point of embodiment 11, wherein the single acknowledgment sequence acknowledges one or more data units transmitted to each STA over the N additional CBF transmissions.
13. The first access point of embodiment 10, wherein between successive CBF transmissions among the N additional CBF transmissions, the one or more processors are configured to perform no initial control frame/initial control response (ICF/ICR) exchange with the one or more STAs.
14. A method for performing coordinated beamforming (CBF) transmissions during a session, comprising:
   exchanging, by a first access point and a second access point, one or more frames to each other to determine one or more parameters for performing a CBF transmission in a session, and a number of CBF transmissions during the session; and
   concurrently performing, by the first access point and the second access point, to one or more stations (STAs), CBF transmissions of a plurality of pairs of data units according to the number of CBF transmissions, using the one or more parameters during the session.
15. The method of embodiment 14, wherein the one or more parameters comprises at least one of a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission.
16. The method of embodiment 14, wherein the one or more parameters are determined prior to the CBF transmissions of the plurality of pairs of data units.
17. The method of embodiment 14, wherein
   the number of CBF transmissions is N which is a non-negative integer,
   the plurality of pairs of data units comprises a first pair of data units and N additional pairs of data units, and
   the CBF transmissions of the plurality of pairs of data units comprise a first CBF transmission of the first pair of data units followed by N additional CBF transmissions of the respective N additional pairs of data units.
18. The method of embodiment 17, wherein
   the plurality of pairs of data units across the first CBF transmission and the N additional CBF transmissions are acknowledged by a single acknowledgment sequence deferred until after completion of the N additional CBF transmissions, and
   the single acknowledgment sequence comprises at least one of one or more multi-user block acknowledgment requests (MU-BARs) or one or more trigger-based (TB) physical layer protocol data units (PPDUs) carrying block acknowledgments (BAs).
19. The method of embodiment 18, wherein the single acknowledgment sequence acknowledges one or more data units transmitted to each STA over the N additional CBF transmissions.
20. The method of embodiment 17, wherein between successive CBF transmissions among the N additional CBF transmissions, at least one of the first access point or the second access point performs no initial control frame/initial control response (ICF/ICR) exchange with the one or more STAs.

## Claims

1. A first access point comprising:
a network interface; and
one or more processors configured to:
exchange, by the network interface, one or more frames with a second access point to determine one or more parameters for performing a coordinated beamforming (CBF) transmission in a session, and a number of CBF transmissions during the session; and
perform, by the network interface to one or more stations (STAs), CBF transmissions of a plurality of data units according to the number of CBF transmissions, using the one or more parameters during the session.

2. The first access point of claim 1, wherein the one or more parameters comprises at least one of a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission,
and/or
wherein the one or more parameters are determined prior to the CBF transmissions of the plurality of data units.

3. The first access point of claims 1 or 2, wherein
the number of CBF transmissions is N which is a non-negative integer,
the plurality of data units comprises a first data unit and N additional data units, and
the CBF transmissions of the plurality of data units comprise a first CBF transmission of the first data unit followed by N additional CBF transmissions of the respective N additional data units,
in particular,
wherein between successive CBF transmissions among the N additional CBF transmissions, the one or more processors are configured to perform no initial control frame/initial control response (ICF/ICR) exchange with the one or more STAs.

4. The first access point of claim 3, wherein
the plurality of data units across the first CBF transmission and the N additional CBF transmissions are acknowledged by a single acknowledgment sequence deferred until after completion of the N additional CBF transmissions, and
the single acknowledgment sequence comprises at least one of one or more multi-user block acknowledgment requests (MU-BARs) or one or more trigger-based (TB) physical layer protocol data units (PPDUs) carrying block acknowledgments (BAs),
in particular,
wherein the single acknowledgment sequence acknowledges one or more data units transmitted to each STA over the N additional CBF transmissions.

5. A first access point comprising:
a network interface; and
one or more processors configured to:
transmit, by the network interface, to a second access point, a first frame indicating a first non-positive integer;
receive, by the network interface, from the second access point, a second frame indicating a second non-positive integer;
determine, as a number of coordinated beamforming (CBF) transmissions performed during a session, a minimum of the first positive integer and the second positive integer; and
in response to determining that the number of CBF transmissions is a positive integer, perform, by the network interface to one or more stations (STAs), CBF transmissions of a plurality of data units according to the number of CBF transmissions, during the session.

6. The first access point of claim 5, wherein the one or more parameters are determined prior to the CBF transmissions of the plurality of data units.

7. The first access point of claims 5 or 6, wherein
the number of CBF transmissions is N which is a non-negative integer,
the plurality of data units comprises a first data unit and N additional data units, and
the CBF transmissions of the plurality of data units comprise a first CBF transmission of the first data followed by N additional CBF transmissions of the respective N additional data units.

8. The first access point of claim 7, wherein
the plurality of data units across the first CBF transmission and the N additional CBF transmissions are acknowledged by a single acknowledgment sequence deferred until after completion of the N additional transmissions, and
the single acknowledgment sequence comprises at least one of one or more multi-user block acknowledgment requests (MU-BARs) or one or more trigger-based (TB) physical layer protocol data units (PPDUs) carrying block acknowledgments (BAs),
in particular,
wherein the single acknowledgment sequence acknowledges one or more data units transmitted to each STA over the N additional CBF transmissions.

9. The first access point of claims 7 or 8, wherein between successive CBF transmissions among the N additional CBF transmissions, the one or more processors are configured to perform no initial control frame/initial control response (ICF/ICR) exchange with the one or more STAs.

10. A method for performing coordinated beamforming (CBF) transmissions during a session, comprising:
exchanging, by a first access point and a second access point, one or more frames to each other to determine one or more parameters for performing a CBF transmission in a session, and a number of CBF transmissions during the session; and
concurrently performing, by the first access point and the second access point, to one or more stations (STAs), CBF transmissions of a plurality of pairs of data units according to the number of CBF transmissions, using the one or more parameters during the session.

11. The method of claim 10, wherein the one or more parameters comprises at least one of a set of access points participating in a CBF transmission during the session, a set of STAs addressed by the CBF transmission, modulation and coding scheme (MCS) used for a STA in the CBF transmission, a number of spatial streams used for a STA in the CBF transmission, or a set of nulling directions used by an AP in the CBF transmission,
and/or
wherein the one or more parameters are determined prior to the CBF transmissions of the plurality of pairs of data units.

12. The method of claims 10 or 11, wherein
the number of CBF transmissions is N which is a non-negative integer,
the plurality of pairs of data units comprises a first pair of data units and N additional pairs of data units, and
the CBF transmissions of the plurality of pairs of data units comprise a first CBF transmission of the first pair of data units followed by N additional CBF transmissions of the respective N additional pairs of data units.

13. The method of claim 12, wherein
the plurality of pairs of data units across the first CBF transmission and the N additional CBF transmissions are acknowledged by a single acknowledgment sequence deferred until after completion of the N additional CBF transmissions, and
the single acknowledgment sequence comprises at least one of one or more multi-user block acknowledgment requests (MU-BARs) or one or more trigger-based (TB) physical layer protocol data units (PPDUs) carrying block acknowledgments (BAs).

14. The method of claim 13, wherein the single acknowledgment sequence acknowledges one or more data units transmitted to each STA over the N additional CBF transmissions.

15. The method of one of claims 12 to 14, wherein between successive CBF transmissions among the N additional CBF transmissions, at least one of the first access point or the second access point performs no initial control frame/initial control response (ICF/ICR) exchange with the one or more STAs.
